# EUROPÄISCHE PATENTSCHRIFT

(11) **EP 2 381 812 B1**
(45) Veröffentlichungstag und Bekanntmachung des Hinweises auf die Patenterteilung: **26.11.2014**
(21) Anmeldenummer: 10701802.0
(22) Anmeldetag: 26.01.2010
(51) Int. Cl.: A45B 9/00, A63C 11/22, F16B 7/14

(54) **LÄNGENVERSTELLBARER STOCK UND KLEMMVORRICHTUNG DAFÜR**
LENGTH-ADJUSTABLE POLE AND CLAMPING APPARATUS THEREFOR
BÂTON RÉGLABLE EN LONGUEUR ET DISPOSITIF DE SERRAGE POUR CELUI-CI

(30) Priorität: 29.01.2009 CH 135092009; 07.07.2009 CH 10552009
(43) Veröffentlichungstag der Anmeldung: 02.11.2011
(73) Patentinhaber: Lekisport AG, 6340 Baar (CH)
(72) Erfinder: LENHART, Klaus, 73275 Ohmden (DE); HEIM, Eberhard, 72669 Unterensingen (DE)
(74) Vertreter: Bremi, Tobias Hans
(86) Internationale Anmeldenummer: PCT/CH2010/000020
(87) Internationale Veröffentlichungsnummer: WO 2010/085905

(56) Entgegenhaltungen:
- EP-A- 0 299 491
- EP-A- 0 822 346
- US-A- 4 497 092

## Beschreibung

### TECHNISCHES GEBIET

Die vorliegende Erfindung betrifft einen längenverstellbaren Stock insbesondere zur Verwendung als Wanderstock, Trekkingstock, Nordic Walking-Stock, Langlaufstock oder Skistock, sowie eine Klemmvorrichtung zur Festlegung der relativen Position von Rohrabschnitten eines solchen Stockes.

### STAND DER TECHNIK

Um einen Wanderstock, Trekkingstock, Nordic Walking-Stock, Langlaufstock oder Skistock in seiner Länge variabel auszugestalten, wurden Mechanismen entwickelt, die es erlauben, zwei den Stock bildende Rohrabschnitte jeweils den Bedürfnissen entsprechend in ihrer axialen Lage unterschiedlich einzustellen. Dazu werden in der Regel zwei Rohrabschnitte verwendet, welche einen unterschiedlichen Durchmesser aufweisen, so dass das eine Rohr in das andere zur Verstellung eingeschoben werden kann.

Einerseits gibt es zu diesem Zweck Vorrichtungen, bei welchen der Klemmmechanismus gewissermassen im Inneren der den Stock bildenden Rohre angeordnet ist. Aus der EP 1450906 ist beispielsweise eine Vorrichtung bekannt, bei welcher ein in einem Innenrohr befestigter und in das Aussenrohr hineinragender Gewindestab vorgesehen ist, auf welchem ein konisch ausgebildetes Innenelement mit einem Innengewinde gelagert ist. Um dieses Innenelement herum ist ein Spreizelement mit einem Gegenkonus angeordnet, welches, wenn das Innenelement in das Spreizelement durch Drehung der beiden Rohrabschnitte hinein getrieben wird, in die beiden Rohrabschnitte festlegender Weise gespreizt wird.

Andererseits gibt es Vorrichtungen, welche auf der Aussenseite, im Sinne einer Schelle, angeordnet sind. So beschreibt beispielsweise die DE 69401765 eine Vorrichtung, bei welcher um ein geschlitztes Rohr eine Kunststoff-Manschette sowie ein Klemmhebel angeordnet ist, und bei welcher der Klemmhebel mit einem durch an der Manschette angeordnete Vorsprünge hindurchtretenden Stift umgelegt und damit die Klemmvorrichtung geklemmt werden kann. Bei dieser Konstruktion wird also das innen liegende Rohr nicht direkt durch die Manschette geklemmt sondern die Manschette liegt auf dem Aussenrohr auf, das Aussenrohr verfügt über einen Schlitz, und die Klemmvorrichtung presst mit anderen Worten das Aussenrohr an das Innenrohr. Ein weiterer im wesentlichen baugleicher Klemmmechanismus ist aus der EP 098898 bekannt. Eine weitere Vorrichtung, welche aussen angeordnet ist, ist aus der EP 1217224 bekannt. Hier ist ebenfalls ein Klemmhebel angeordnet, welcher hier aber in einer Kippbewegung um eine Achse senkrecht zur Stockachse umgelegt werden kann, und welcher gewissermassen gabelförmig ausgebildet ist.

Eine Klemmvorrichtung mit den Merkmalen des Oberbegriffs des Anspruchs 1 ist aus der EP 0 299 491 A bekannt.

### DARSTELLUNG DER ERFINDUNG

Der Erfindung liegt demnach u.a. die Aufgabe zugrunde, eine verbesserte Klemmvorrichtung für die oben angegebenen Zwecke vorzuschlagen. Ziel ist es dabei insbesondere, eine Klemmvorrichtung vorzuschlagen, welche eine einfache Konstruktion aufweist, bei geringer Kraftaufwendung für das Umlegen eines Hebels eine trotzdem hohe Klemmkraft aufweist, und welche auch bei unterschiedlichsten Temperaturen sowie unter Beeinflussung von Eis, Schnee und Schmutz störungsfrei funktioniert.

Die Lösung dieser Aufgabe wird dadurch erreicht, dass eine Klemmvorrichtung für einen Wanderstock, Trekkingstock, Nordic Walking-Stock, Langlaufstock oder Skistock zur lösbaren axialen Festlegung eines in eine Öffnung der Klemmvorrichtung einschiebbaren Rohrabschnittes vorgeschlagen wird, welche im wesentlichen folgende Merkmale aufweist:
- die Klemmvorrichtung umfasst eine Kunststoffmanschette, welche den Rohrabschnit wenigstens in einem axialen Abschnitt im wesentlichen unmittelbar umgreift und im geschlossenen Zustand klemmt;
- die Kunststoffmanschette weist wenigstens im den Rohrabschnitt umgreifenden Bereich wenigstens einen axialen, den Umfang der Kunststoffmanschette in diesem Bereich variabel machenden Schlitz auf und ist im verbleibenden axialen Bereich im wesentlichen umlaufend ausgebildet;
- an der Kunststoffmanschette ist beidseits dieses Schlitzes jeweils ein Vorsprung angeordnet ist (Verlaufsrichtung der Vorsprünge im wesentlichen senkrecht zur Achse des Rohrabschnitts), wobei diese Vorsprünge eine koaxiale im wesentlichen senkrecht zur Achse des Rohrabschnitts angeordnete Durchtrittsöffnung aufweisen, durch welche ein Querstift hindurchgreift (der Schlitz zwischen den beiden Vorsprüngen kann entweder als einfacher linearer radialer Schlitz ausgebildet sein, er kann aber auch beispielsweise gekrümmt oder eckig ausgebildet sein oder mehrfache Windungen aufweisen, was zu einer geringeren Schmutzanfälligkeit führt);
- der Querstift verfügt an der Außenseite des zweiten Vorsprungs über einen Anschlag und an der Außenseite des ersten Vorsprungs über eine senkrecht zur Achse des Querstifts und parallel zur Achse des Rohrabschnitts angeordnete Drehachse für einen Klemmhebel;
- der Klemmhebel weist einen Hebelarm auf, welcher bevorzugtermassen bei geschlossener Klemmvorrichtung die Kunststoffmanschette wenigstens teilweise umgreift;
- der Klemmhebel weist einen um die Drehachse exzentrischen Abrollbereich (oder Gleitbereich) auf, mittels welchem sich der Abstand zwischen dem Anschlag und einer auf der Außenseite des ersten Vorsprungs angeordneten Gegenfläche zur Klemmung durch verschwenken des Klemmhebels in die geschlossene Position verringern lässt;
- die Gegenfläche in Form eines wenigstens teilweise im ersten Vorsprung in einer Vertiefung angeordneten Gegendruckelements, das bevorzugtermassen Metallelements ausgebildet ist.

Unter exzentrisch ist dabei im Zusammenhang mit dem Abrollbereich zu verstehen, dass der Radius des Abrollbereichs nicht konstant ist um die Drehachse des Hebels, sondern im entscheidenden Abschnitt, das heißt dort wo im Rahmen des Verstellbereichs des Hebels der Abrollbereich auf die Gegenfläche aufliegt, einen sukzessive zunehmenden Radius aufweist. Dies so, dass bei geschlossener Klemmvorrichtung, das heißt bei voll an die Klemmvorrichtung angelegtem Klemmhebel dieser Radius bei seiner Maximalposition ist und damit der Abstand von der Gegenfläche und dem Anschlag einen minimalen Wert annimmt, und bei geöffneter Klemmvorrichtung das heißt abstehendem Klemmhebel der Radius einen geringeren Wert hat, so dass der Abstand von der Gegenfläche und dem Anschlag einen größeren Wert annimmt und somit der geschlitzte Bereich der Manschette einen größeren Innendurchmesser aufweist. Abrollfläche und Drehachse des Hebels sind also exzentrisch angeordnet.

Der Kern der Erfindung besteht somit unter anderem darin, als Auflagefläche respektive Gegenfläche für diesen Abrollbereich ein Gegendruckelement, vorzugsweise als metallisches Element, vorzusehen. So werden bessere Gleiteigenschaften des Abrollbereichs (dieser kann, genau wie der gesamte Klemmhebel, ebenfalls aus Metall sein oder aber aus Kunststoff) erreicht, es wird eine geringere Abnutzung sowohl der Gegenfläche als auch des Abrollbereichs bewirkt, und es wird durch die zusätzliche wenigstens teilweise Versenkung im Vorsprung weitgehend verhindert, dass das Metallelement, welches die Gegenfläche bildet, verschmutzt werden kann respektive schädliche Wirkung zeigende Schmutzteile in den kritischen Bereich eindringen können. Außerdem wird durch die Anordnung in der Vertiefung eine bessere Führung während des Umlegens des Hebels gewährleistet, und es resultiert eine ästhetischere Konstruktion.

Grundsätzlich kann die Gegenfläche als gekrümmte Fläche ausgebildet sein, welche beispielsweise einen Krümmungsradius aufweist, welcher im wesentlichen dem maximalen Krümmungsradius des exzentrischen Bereiches des Abrollbereiches des Klemmhebels entspricht. Allgemein gesprochen kann gemäß einem ersten Ausführungsbeispiel die Gegenfläche als konkave Fläche ausgebildet sein, deren Krümmungsradius im wesentlichen dem Krümmungsradius des Abrollbereichs angepasst ist.

Bevorzugtermassen ist die Gegenfläche als im Auflagebereich ebene Fläche ausgebildet, so resultieren die geringsten Reibungskräfte, da es sich bei der Gegenfläche um ein metallisches Element handelt, kann aber trotzdem der Druck sehr effizient auf den umliegenden Kunststoffbereich übertragen werden. Während es normalerweise infolge der stark lokal auftretenden Kräfte bei reinen Kunststoffkonstruktionen nach dem Stand der Technik nicht sinnvoll möglich ist, die Gegenfläche als Ebene auszubilden, ist dies sehr effizienter Weise bei einer Metallkonstruktion möglich.

Die Kunststoffinanschette kann aus einem Kunststoffmaterial wie beispielsweise Polyethylen, Polyamid (insb. PA 66), Polycarbonat, Polypropylen, Acrylnitril-Butadien-Styrol-Copolymerisat (ABS) oder auch aus Mischungen (Blends) oder Kombinationen (Bikomponenten) solcher Materialien, gegebenenfalls mit Verstärkungen aus Kohlefasern oder Glasfasern, ausgebildet sein. Bevorzugtermassen ist die Kunststoffmanschette einstückig ausgebildet aus einem solchen Material, und kann auf der Innenseite, insbesondere in Klemmbereich, eine besondere Beschichtung, Streifen oder einen zylindrischen Einsatz aus einem Material mit großer Reibung (Gummi oder Ähnliches) aufweisen, um die axiale Feststellkraft zu erhöhen. Auch der Hebel kann aus einem solchen Kunststoffmaterial ausgebildet und einstückig sein, der Hebel kann aber auch aus Metall hergestellt werden, auch möglich ist ein Metallhebel mit angeformten oder angeklebten Kunststoffbetätigungsbereichen. Der Querstift ist typischerweise aus Metall, kann aber auch aus einem hoch stabilen Kunststoffmaterial gefertigt sein (beispielsweise Glasfaser-verstärkte Materialien oder Kohlenfaser-verstärkte Materialien).

Gemäss einer bevorzugten Ausführungsform der Klemmvorrichtung ist das Metallelement in Form eines die Kunststoffmanschette auf deren Außenseite auf der den Vorsprüngen gegenüberliegenden Seite umlaufenden, bevorzugtermassen einstückigen, Metallbandes ausgebildet, dessen erstes Ende auf der dem Abrollbereich zugewandten Außenseite des ersten Vorsprunges in einer Vertiefung angeordnet ist und eine erste Ausnehmung oder eine Durchgangsöffnung für den Querstift aufweist. Der Mittelbereich des Bandes umläuft die Kunststoffmanschette, bevorzugtermassen in einer umlaufenden Vertiefung. Das zweite Ende des Bandes ist auf der dem Anschlag zugewandten Außenseite des Zweiten Vorsprunges angeordnet, bevorzugtermassen in einer Vertiefung, und das zweite Ende des Bandes verfügt über eine zweite Ausnehmung oder eine Durchgangsöffnung für den Querstift und/oder ein Anschlagselement.

Problematisch bei der üblichen Verwendung von Kunststoff für die Manschetten bei solchen Klemmvorrichtungen ist die Tatsache, dass einerseits Kunststoff recht große Dimensionsunterschiede bei unterschiedlichen Temperaturen aufweist. Da dies direkt auf die Klemmkraft einwirkt, und beispielsweise eine bei niedriger Temperatur heftig geklemmte Vorrichtung bei Sonneneinstrahlung lösen kann, kann dies ein Risiko darstellen. Andererseits ist Kunststoff problematisch, weil er einen nicht vernachlässigbaren Dehnungskoeffizient aufweist, und somit eine die Klemmkraft beeinträchtigende Elastizität aufweist. Zudem wird bei häufiger Verwendung Kunststoff sich sukzessive Strecken und somit die mögliche Klemmkraft abnehmen oder immer wieder Nacheinstellungen erforderlich machen. All diese Probleme können überwunden werden, wenn der entscheidende Umfangsbereich der Manschette, welcher im wesentlichen für die anliegende Klemmkraft entscheidend ist, durch ein derartiges Metallband umfasst und damit auch in diesem Bereich die negativen Eigenschaften des Kunststoffs gewissermaßen ausgeschaltet werden. Dies führt zu einer erheblich stabileren und langlebigeren Klemmkraft als dies mit den gängigen Kunststoffkonstruktionen überhaupt möglich ist. Trotzdem kann aber vermieden werden, die gesamte Klemmkonstruktion aus einem metallischen Werkstoff herzustellen.

Das Metallband hat dabei z.B. eine Breite von 1-20 mm, vorzugsweise von 2-10 mm, insbesondere bevorzugt von 3-7 mm und bevorzugtermassen eine Dicke im Bereich von 0,1-2 mm, insbesondere bevorzugtermassen eine Dicke im Bereich von 0.25-1.5 mm, wobei das Metallband insbesondere bevorzugtermassen aus gehärtetem Stahl, rostfreiem Stahl oder Federstahl besteht. Auch denkbar ist ein hoch zugfestes Kunststoffband, ggf. mit Faserverstärkung.

Grundsätzlich kann das Metallelement aus Stahl, ganz oder teilweise oder Oberflächen-gehärtetem Stahl gefertigt sein. Auch möglich ist gehärtetes Aluminium.

Grundsätzlich kann der Hebel aus Metall oder Kunststoff bestehen. Besteht er aus Metall so kann er aus Stahl, ganz oder teilweise oder Oberflächen-gehärtetem Stahl (gehärtet insbesondere im Abrollbereich) gefertigt sein. Auch möglich ist gehärtetes Aluminium. Besteht der Hebel aus Metall so kann er über angeformte Kunststoffbereiche verfügen, um spezielle ergonomische Formgebung zu ermöglichen, auch ist es dann möglich, solche Elemente aus grifffreundlichem Material auszubilden. Solche Bereiche aus Kunststoff können an einem Metallhebel entweder gleich im Spritzgussverfahren oder bei der Montage angebracht werden.

Das Metallelement kann, gemäß einer weiteren bevorzugten Ausführungsform, beidseits der Gegenfläche jeweils eine Durchgangsöffnung aufweisen, wobei die Gegenfläche dann durch den dazwischen liegenden Quersteg gebildet wird. Dabei ist der Querstift an seinem Klemmhebel-seitigen Ende gabelförmig ausgebildet, wobei die beiden Gabelarme durch die Durchgangsöffnungen hindurch greifen. An den Enden der Gabelarme und diese verbindend ist die Drehachse angeordnet und der Abrollbereich des Klemmhebels ist zwischen den Gabelarmen derart angeordnet, dass er bei Schwenkbewegung des Klemmhebels auf dem Quersteg läuft.

Bevorzugt werden wenigstens die sich berührenden resp. aufeinander reibenden Bereiche (insb. Metallscheibe und Quersteg und Abrollbereich des Hebels) aus gehärteten Materialen hergestellt oder dort spezifisch gehärtet.

Bei dieser Ausführungsform, bei welcher typischerweise diese Durchgangsöffnungen für die Gabelarme beispielsweise als einander gegenüberliegende Halbmond-förmige Löcher ausgebildet sind, können durch die sehr lokal auf dem normalerweise als Ebene ausgebildeten Quersteg anliegenden Kräfte, welche aber auf die ringförmige Umlauffläche des Metallelements gut verteilt werden können, sehr hohe Klemmkräfte bei niedriger Reibung erzeugt werden. Typischerweise ist eine solche Ausführungsform dadurch gekennzeichnet, dass das Metallelement kreisscheibenförmig ausgebildet ist und in einer Vertiefung im ersten Vorsprung entlang der Achse des Querstifts angeordnet ist, und dass die Tiefe der Vertiefung größer ist als die Dicke des Metallelements. Vorzugsweise liegt die Dicke des Metallelements im Bereich von 0.5-3mm, vorzugsweise im Bereich von 1-2mm, und die Tiefe der Vertiefung im Bereich von 3-10 mm, vorzugsweise im Bereich von 5-8 mm.

Eine weitere bevorzugte Ausführungsform ist dadurch gekennzeichnet, dass der Querstift an seinem klemmhebelseitigen Ende T-förmig ausgebildet ist, wobei die seitlichen Arme dieses T's die Drehachse für den Klemmhebel bilden und der Klemmhebel für den Querstift einen in Verschwenkrichtung länglichen Schlitz aufweist, welcher den Abrollbereich in zwei seitlich des Querstifts angeordnete Abrollbereiche aufteilt.

Generell ist es möglich, die Drehachse und gleichermaßen den Querstift zur Gewichtsersparnis anzubohren oder sogar hohl auszubilden.

Es ist bevorzugt, dass nur zwischen den beiden Vorsprüngen ein einziger Schlitz vorgesehen ist und der Rest der Manschette umlaufend ausgebildet ist. Insbesondere um größere Verstellbereiche zu ermöglichen, kann es aber in bestimmten Fällen von Vorteil sein, wenn die Kunststoffmanschette in ihrem oberen Abschnitt, das heißt im eigentlichen Klemmbereich, wenigstens zwei, vorzugsweise wenigstens drei axial verlaufende Schlitze aufweist, wobei einer dieser Schlitze zwischen den beiden Vorsprüngen angeordnet ist und vorzugsweise diese Schlitze gleichmäßig um den Umfang verteilt sind.

Bevorzugtermassen wird der Anschlag verstellbar ausgebildet, das heißt es ist möglich, den minimalen Abstand zwischen Gegenfläche und Anschlag variabel den Bedürfnissen angepasst einzustellen. Dies ist insbesondere für unterschiedliche Temperaturen, unterschiedliche Klemmkräfte oder insbesondere auch bei Abnutzung von großem Vorteil, da Nacheinstellungen ermöglicht werden. Zudem können so unterschiedliche Rohrdurchmesser, z.B. resultierend aufgrund von Toleranzen oder unterschiedlichen Beschichtungen etc. ausgeglichen werden. Dabei kann beispielsweise der Anschlag respektive das Anschlagselement mit einem Gewinde ausgebildet sein und der Querstift mit einem entsprechenden, mit diesem Gewinde in Eingriff stehenden Gegengewinde. Der Anschlag kann so beispielsweise als Mutter, Stellschraube oder Schraube ausgebildet sein, vorzugsweise mit einer umlaufenden Zahnung für Verstellung von Hand (z.B. Rändelmutter, Rändelschraube) und/oder einem Kamm und/oder einer Nut für den Eingriff eines Verstellwerkzeugs. Dabei kann eine Sicherung gegen unbeabsichtigtes Lösen des Anschlages vom Querstift (Formschluss, Kraftschluss, Stoffschluss) bei Hebelbewegung oder Benutzung vorgesehen werden, welche aber dennoch erlaubt, eine Nachjustierung über die Mutter, Stellschraube oder Schraube vorzunehmen.

Eine weitere bevorzugte Ausführungsform ist dadurch gekennzeichnet, dass die Klemmvorrichtung im verbleibenden axialen Bereich, das heißt dort wo keine Klemmung stattfindet, zur Aufnahme und Befestigung des Abschnitts eines Außenrohres ausgebildet ist, wobei das Außenrohr einen Innendurchmesser aufweist, welcher im wesentlichen gleich ist oder nur unwesentlich größer als der Außendurchmesser des Rohrabschnitts.

Generell kann es sich bei der Durchtrittsöffnung in beiden Vorsprüngen um ein rundum geschlossenes Loch handeln mit bevorzugtermassen einem Durchmesser im Bereich von 2-7 mm, wobei bevorzugtermassen der Durchmesser des Querstifts im durch diese Durchtrittsöffnungen hindurch tretenden Bereich im Bereich von 2-6 mm liegt.

Der Hebelarm kann, insbesondere um ein unbeabsichtigtes Auslösen beispielsweise beim Kontakt mit einem Gegenstand oder mit einem Körperteil zu verhindern, bei geschlossener Klemmvorrichtung wenigstens abschnittsweise oder vorzugsweise im wesentlichen vollständig in einer Vertiefung oder Rille in der Kunststoffmanschette angeordnet sein.

Das Innenrohr verfügt, wenn es nicht mit einer auf der Innenseite der Rohrabschnitte angeordneten Klemmvorrichtung ausgestattet ist, vorzugsweise an seinen Ende über ein Führungselement (z.B. ballig ausgebildeter Endstopfen, typ. eingesetzt und kraft- und/oder stoffschlüssig befestigt).

Eine weitere bevorzugte Ausführungsform ist dadurch gekennzeichnet, dass sich eine einseitige Griffvertiefung im verbleibenden axialen Bereich befindet.

Bevorzugtermassen verfügt zudem der den umgreifenden Bereich variabel machende Schlitz in der an der umlaufenden verbleibenden axialen Bereich angrenzenden Zone über eine Erweiterung des Schlitzes, vorzugsweise eine senkrecht zum axialen Schlitz verlaufende Schlitzerweiterung. Diese Schlitzerweiterung ist vorzugsweise zusammen mit dem axialen Schlitz im wesentlichen T-förmig ausgebildet und erstreckt sich um den Umfang der Manschette im Bereich von 10-90°, vorzugsweise im Bereich von 20-50°.

Der Anschlag kann bevorzugtermassen in Form einer Mutter ausgebildet sein, welche über einen breiten Abschnitt verfügt, welcher auf einem Absatz des zweiten Vorsprungs aufliegt und über einen verjüngten Abschnitt, wobei der verjüngte Abschnitt vorzugsweise ein Innengewinde aufweist. Dabei kann diese Mutter beispielsweise als ganzes aus Metall oder Keramik oder einem Kunststoff gefertigt sein. Dabei ist es weiterhin vorzugsweise möglich, in einem in der Durchtrittsöffnung dieser Mutter vorhandenen umlaufenden Einstich einen O-Ring anzuordnen, welcher eine Dicke aufweist, dass er mit einem in die Mutter eingreifenden Außengewinde (des Querstifts) eine die Drehung der Mutter hemmende Reibung gewährleistet. Die Mutter kann aber auch aus einem Kunststoff gefertigt sein, in welchen ein Gewindeeinsatz aus Metall eingepresst ist oder in welchen ein solcher Gewindeeinsatz aus Metall während des Spritzverfahrens eingebettet wird. Es ist dabei möglich, in einem axialen Bereich der Durchtrittsöffnung der Mutter, wo der Randbereich der Durchtrittsöffnung nicht durch den Gewinndeeinsatz gebildet wird, den Kunststoff soweit in die Durchtrittsöffnung hineinragen lassen, dass eine Hemmung der Drehung der Mutter durch die Reibung dieses Kunststoffabschnittes am Außengewinde resultiert.

Der Hebelarm umgreift vorzugsweise die Kunststoffmanschette wenigstens teilweise, dabei kann in der Kunststoffmanschette eine wenigstens teilweise oder auch vollständig umlaufende Vertiefung vorgesehen sein, in welche der Hebelarm wenigstens teilweise zu liegen kommt, wenn die Manschette geschlossen ist.

Eine weitere bevorzugte Ausführungsform ist dadurch gekennzeichnet, dass der Querstift, vorzugsweise aus Metall, einen ersten Abschnitt aufweist mit einem Außengewinde, dieser erste Abschnitt ist dazu vorgesehen, beispielsweise in das Innengewinde einer Mutter, wie sie im obigen Absatz beschrieben wird, einzugreifen. Der Querstift verfügt an diesen ersten Abschnitt angrenzend und vorzugsweise mit diesem einstückig ausgebildet über einen abgeflachten Abschnitt, das heißt einen Abschnitt, dessen Querschnittsfläche nicht kreisförmig ist und auch kein Außengewinde aufweist. In diesem zweiten Abschnitt ist vorzugsweise eine Durchtrittsöffnung quer zur Achse des Querstifts für den Achsstift des Hebels vorgesehen. Zur Gewichtserleichterung ist es möglich, dass in diesem zweiten Abschnitt beispielsweise parallel zur Verlaufsrichtung der genannten Durchtrittsöffnung für den Achsstift eine oder mehrere weitere Bohrungen vorgesehen sind. Die Länge des zweiten Abschnitts ist dabei so gewählt, dass dieser zweite Abschnitt sowohl im geöffneten wie auch im geschlossenen Zustand des Hebels in eine entsprechende Durchtrittsöffnung des Metallelements eingreift.

Das Metallelement kann, wie bereits erläutert, in Form einer Metallplatte, beispielsweise bevorzugtermassen einer Dicke im Bereich von 1-3 mm und/oder aus Edelstahl, über einen Erweiterungsfortsatz verfügen, um dessen Drehung in der entsprechenden Vertiefung im ersten Vorsprung zu verhindern. Des weiteren kann das Metallelement über eine längliche Durchtrittsöffnung für den Querstift verfügen. Die Querschnittsöffnung ist dabei beispielsweise und bevorzugtermassen angepasst und gerade etwas größer als die Querschnittsfläche des oben erläuterten zweiten Abschnitts des Querstifts.

Des weiteren betrifft die vorliegende Erfindung einen Stock, insbesondere Wanderstock, Trekkingstock, Nordic-Walking-Stock, Langlaufstock oder Skistock mit einer Klemmvorrichtung wie sie oben beschrieben wurde, insbesondere bevorzugt zur Längenverstellung von wenigstens zwei Rohrabschnitten oder drei Rohrabschnitten.

Dabei ist es möglich, zusätzlich zur Klemmvorrichtung eine auf der Innenseite der Rohrabschnitte angeordnete Klemmvorrichtung mit wenigstens einem Spreizelement vorzusehen. Es kann sich dabei um eine innen liegende Klemmvorrichtung handeln, wie sie in der EP 1 450 906 beschrieben worden ist.

Weitere Ausführungsbeispiele sind in den abhängigen Ansprüchen beschrieben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:

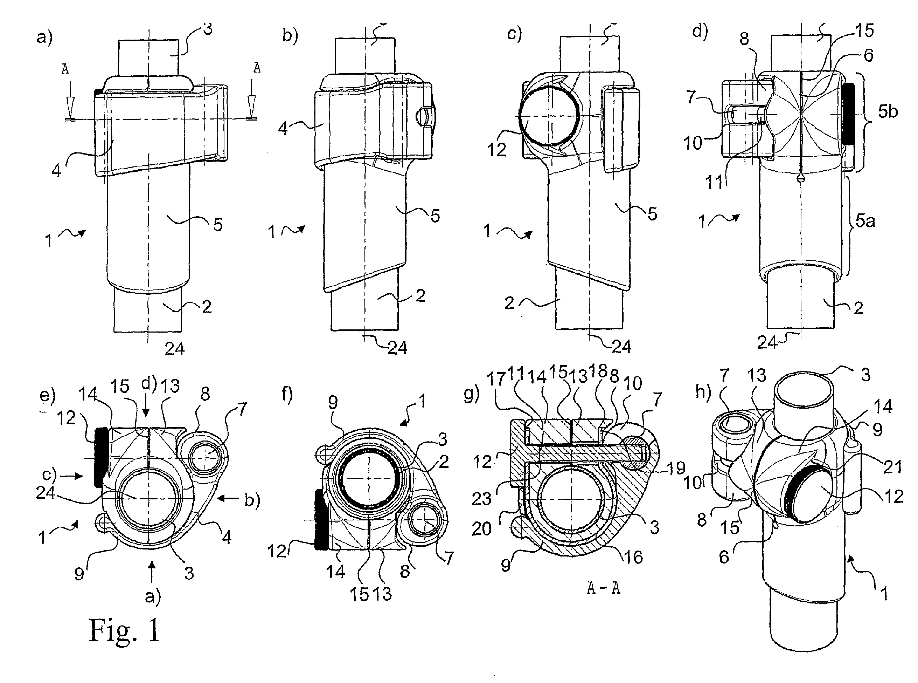

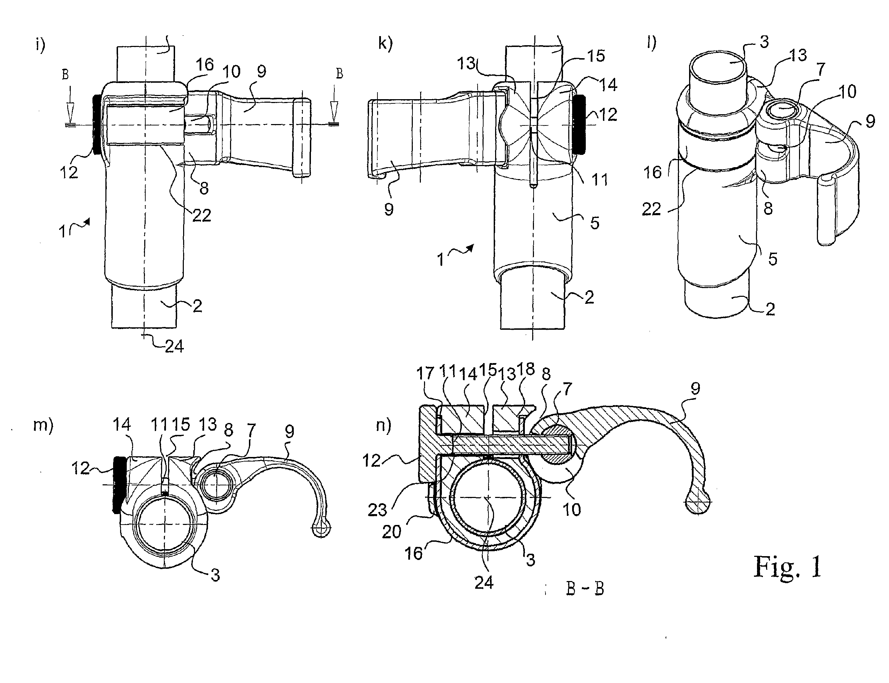

- Fig. 1: ein erstes Ausführungsbeispiel eines Klemmmechanismus, wobei in a)-d) seitliche Ansichten entlang der entsprechenden Pfeile in e) dargestellt sind, in e) eine Ansicht von oben, in f) eine Ansicht von unten, in g) eine Schnittdarstellung entlang der in a) angegebenen Ebene A-A und in h) eine perspektivische Ansicht von schräg oben, und wobei der gleiche Klemmmechanismus in geöffneter Form dargestellt ist in den Figuren i)-n), wobei i) eine Ansicht entlang der Richtung a) darstellt, k) eine Ansicht entlang der Richtung d), 1) eine perspektivische Ansicht von schräg oben, m) eine Ansicht von oben und n) einen Schnitt entlang der Ebene B-B gemäß Figur i);
- Fig. 2: ein zweites Ausführungsbeispiel eines Klemmmechanismus mit drei axialen Schlitzen, wobei in a) eine seitliche Ansicht entlang a), in b) eine seitliche Ansicht entlang b), beide im geschlossenen Zustand, dargestellt sind, in c) eine perspektivische Ansicht im geöffneten Zustand, in d) eine Ansicht von oben im geschlossenen Zustand in e) eine Ansicht von unten im geschlossenen Zustand, in f) einen Schnitt entlang der Ebene A-A nach Figur a) darstellen;
- Fig. 3: ein drittes Ausführungsbeispiel in zwei Schnittdarstellungen im geschlossenen Zustand (a) und im geöffneten Zustand (b) entlang der Ebenen A-A gemäß den Figuren 1a) respektive 2a) respektive entlang der Ebene B-B in Figur 1i);
- Fig. 4: ein viertes Ausführungsbeispiel in zwei Schnittdarstellungen im geschlossenen Zustand (a) und im geöffneten Zustand (b) entlang der Ebenen A-A gemäß den Figuren 1a) respektive 2a) respektive entlang der Ebene B-B in Figur 1i);

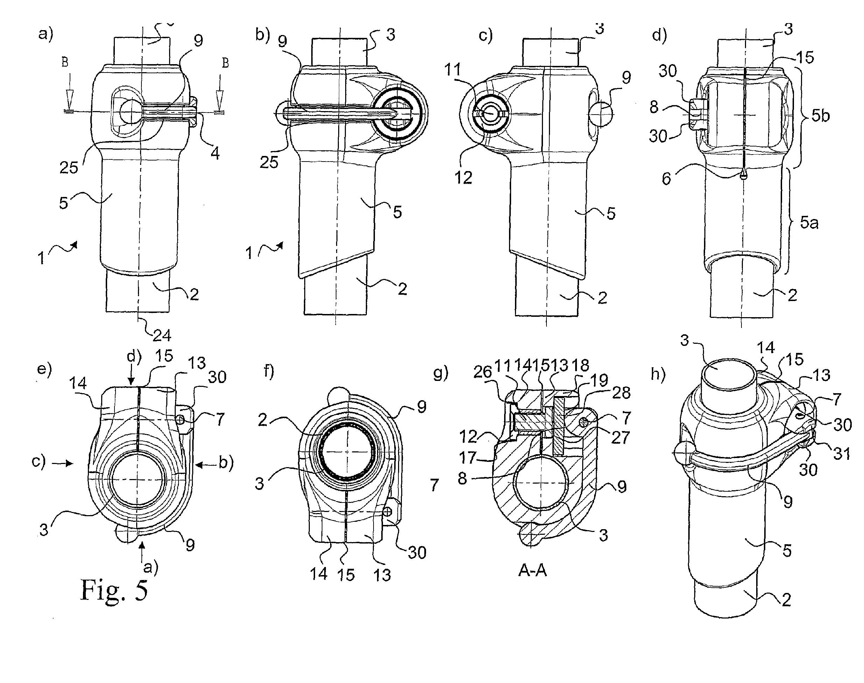

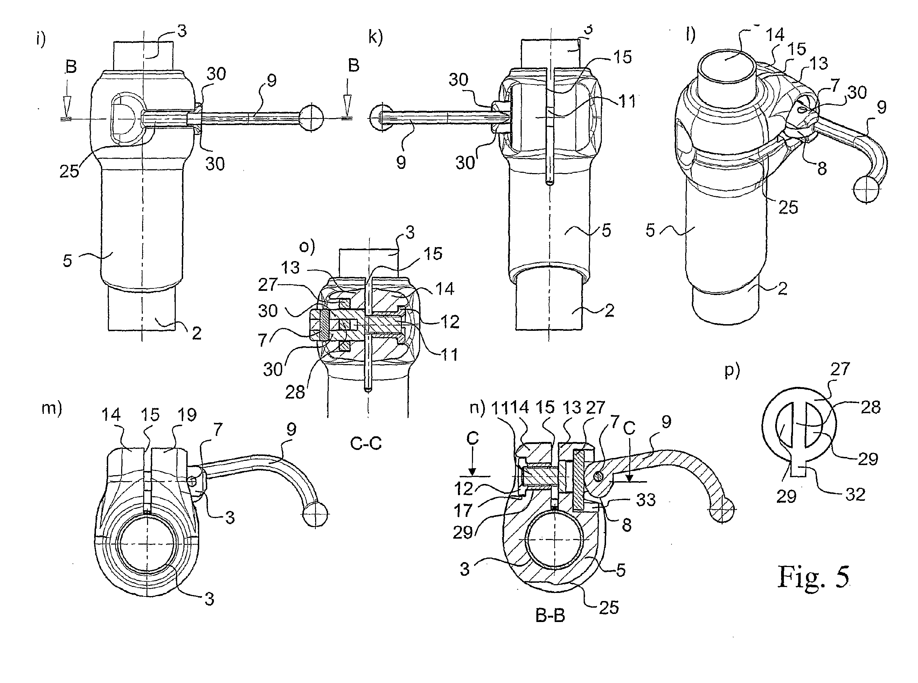

- Fig. 5: ein fünftes Ausführungsbeispiel eines Klemmmechanismus, wobei in a)-d) seitliche Ansichten entlang der entsprechenden Pfeile in e) dargestellt sind, in e) eine Ansicht von oben, in f) eine Ansicht von unten, in g) eine Schnittdarstellung entlang der in a) angegebenen Ebene A-A und in h) eine perspektivische Ansicht von schräg oben, und wobei der gleiche Klemmmechanismus in geöffneter Form dargestellt ist in den Figuren i)-n), wobei i) eine Ansicht entlang der Richtung a) darstellt, k) eine Ansicht entlang der Richtung d), 1) eine perspektivische Ansicht von schräg oben, m) eine Ansicht von oben und n) einen Schnitt entlang der Ebene B-B gemäß Figur i) darstellen, wobei o) einen Schnitt senkrecht zur Papierebene in g) durch die Achse des Hebels darstellt, und wobei p) eine Aufsicht auf das Metallelement darstellt;

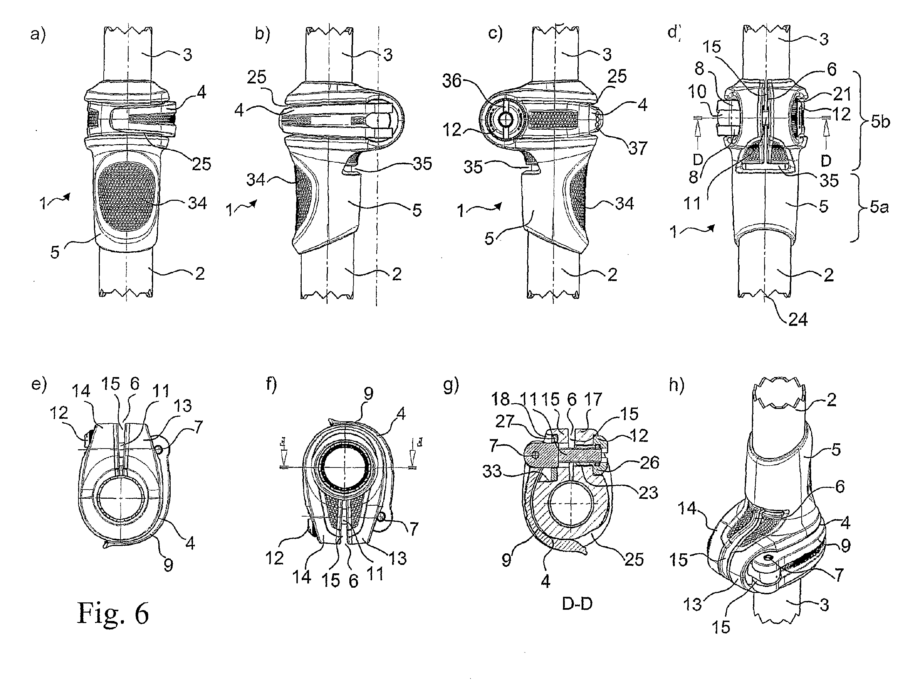

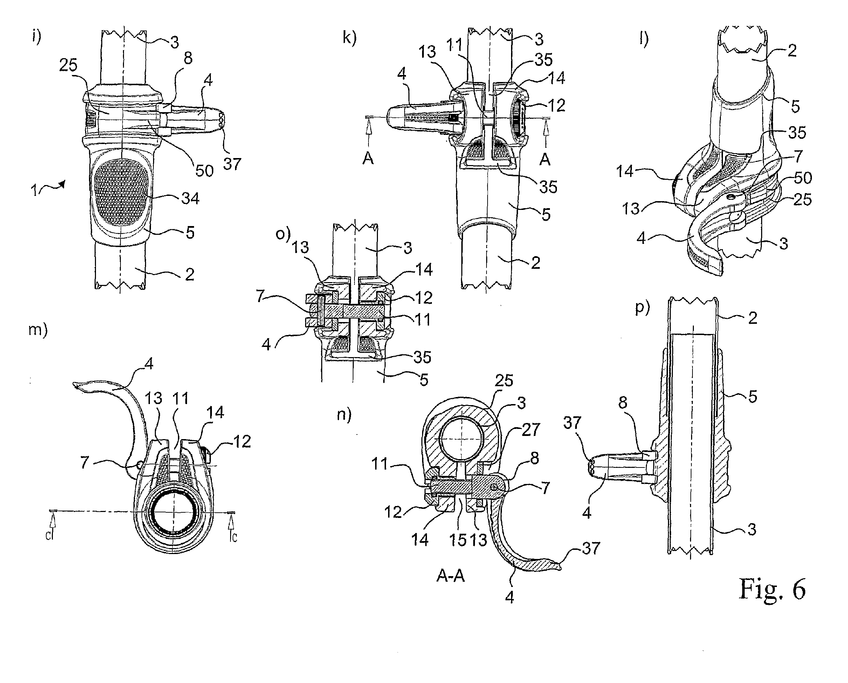

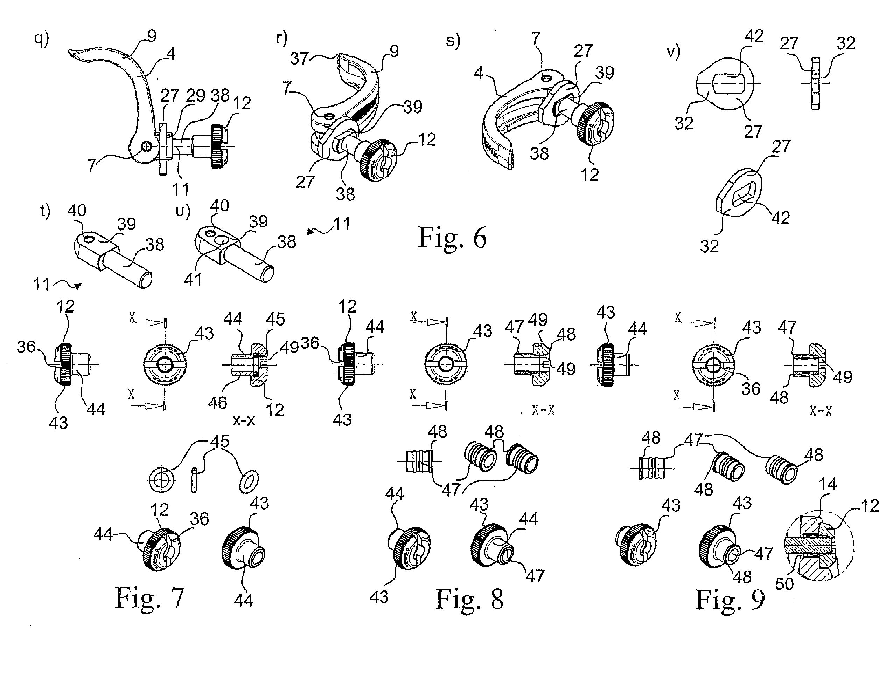

- Fig. 6: ein sechstes Ausführungsbeispiel eines Klemmmechanismus, wobei in a)-d) seitliche Ansichten entlang der entsprechenden Pfeile in e) dargestellt sind, in e) eine Ansicht von oben, in f) eine Ansicht von unten, in g) eine Schnittdarstellung entlang der in d) angegebenen Ebene D-D und in h) eine perspektivische Ansicht von schräg unten, und wobei der gleiche Klemmmechanismus in geöffneter Form dargestellt ist in den Figuren i)-n), wobei i) eine Ansicht entlang der Richtung a) darstellt, k) eine Ansicht entlang der Richtung d), 1) eine perspektivische Ansicht von schräg unten, m) eine Ansicht von unten und n) einen Schnitt entlang der Ebene A-A gemäß Figur k) darstellen, wobei o) einen Schnitt senkrecht zur Papierebene in g) durch die Achse des Hebels darstellt, und wobei p) einen Schnitt entlang C-C in m) darstellt, wobei q) nur Hebel, Stift und Stellschraube sowie Metallelement in geöffneter Position in einer seitlichen Ansicht, r) dasselbe in einer perspektivischen Ansicht, s) den entsprechend geschlossenen Hebel in einer perspektivischen Ansicht, v) das Metallelement in Aufsicht, seitlicher Sicht und perspektivischer Ansicht, t) den Querstift in einer perspektivischen Ansicht und u) eine leicht abgewandelte Ausführungsform des Querstifts in einer perspektivischen Ansicht darstellen;
- Fig. 7: Ansichten einer ersten Bauweise einer Stellschraube;
- Fig. 8: Ansichten einer zweiten Bauweise einer Stellschraube; und
- Fig. 9: Ansichten einer dritten Bauweise einer Stellschraube.

### BESCHREIBUNG BEVORZUGTER AUSFÜHRUNGSFORMEN

Eine Klemmvorrichtung 1 gemäss einem ersten Ausführungsbeispiel ist in Figur 1 in unterschiedlichen Ansichten dargestellt, wobei in den Figuren 1a)-h) die geschlossene Position dargestellt ist und in den Figuren 1i)-n) die offene Position. Die Klemmvorrichtung 1 umfasst eine Kunststoffmanschette 5. Diese Kunststoffmanschette ist am oberen Ende eines Aussenrohrs 2 befestigt. Dazu verfügt ein unterer Abschnitt 5a über eine entsprechende gestufte Ausnehmung, in welcher dieses Aussenrohr 2 befestigt ist, typischerweise durch eine Kombination von Kraftschluss und Stoffschluss. Ebenfalls möglich ist die zusätzliche oder alternative Verwendung von Formschluss, z.B. durch eine Ausnehmung im Rohr in Kombination mit einer entsprechenden Nocke auf der Innenseite der Ausnehmung der Manschette. Von der Oberseite her greift in diese Klemmvorrichtung ein Innenrohr 3 ein, durchstösst den oberen Abschnitt 5b und das Innenrohr 3 ragt normalerweise noch ein Stück weit in das Aussenrohr 2 hinein. Normalerweise ist der Innendurchmesser des Aussenrohrs im Wesentlichen gleich oder nur unwesentlich grösser als der Aussendurchmesser des Innenrohres, so dass die beiden Rohre in geführter Weise ineinander gleiten können.

Im unteren Abschnitt 5a ist die Kunststoffmanschette 5 umlaufend ausgebildet, während sie im oberen Abschnitt 5b einen axialen Schlitz 6 aufweist. Dieser Schlitz befindet sich zwischen den zwei Vorsprüngen 13 und 14, welche im oberen Abschnitt radial von der Manschette abstehen. Zwischen diesen beiden Vorsprüngen 13, 14 ist ein Spalt 15, welcher in der geschlossenen Position (vgl. insbesondere die Figuren d) und g)) weiter geschlossen ist, während er in der offenen Position (vgl. insbesondere k und n) offen steht.

Beide Vorsprünge 13, 14 verfügen über jeweils eine Durchtrittsöffnung 23, welche senkrecht zur Stockachse 24 angeordnet sind und koaxial zueinander verlaufen. Durch diese Durchtrittsöffnung 23 tritt ein Querstift 11 hindurch. Der Querstift 11 hat auf seiner einen Seite einen Anschlag, welcher bei diesem Ausführungsbeispiel als Rändelschraube 12 ausgebildet ist und auf der radialen Umfangsfläche über eine gezahnte oder gerippte Oberfläche 21 verfügt. Diese Rändelschraube 12 liegt mit ihrer Unterseite auf der Aussenseite des zweiten Vorsprungs 14 auf. In diesem Ausführungsbeispiel ist der Anschlag mit anderen Worten einstückig mit dem Querstift ausgebildet, das heißt es gibt eine Rändelschraube. Die Verstellbarkeit resultiert dann über den Eingriff dieser Rändelschraube in ein Innengewinde der Drehachse. Alternativ ist es möglich, eine Rändelmutter vorzusehen, und den Querstift am entsprechenden Ende mit einem Außengewinde. In diesem Fall kann der Querstift starr und fixiert mit der Drehachse ausgebildet sein (beispielsweise in Form eines T-Stücks), die Verstellbarkeit resultiert dann über die Drehung der Rändelmutter auf dem Gewinde des Querstifts. Es ist aber auch möglich, die Rändelmutter auch bei dieser Ausführungsform fix mit dem Querstift zu verbinden, die Verstellung erfolgt dann, wie im obigen Fall, über die Drehung des Querstifts im Innengewinde der Drehachse.

Am anderen Ende verfügt der Querstift 11 über zwei seitliche Erweiterungen (T-Form), welche koaxial verlaufen und parallel zur Stockachse 24 angeordnet sind. Diese Erweiterungen bilden die Drehachse 7 für den Klemmhebel 4. Der Klemmhebel 4 verfügt über einen Hebelarm 9, welcher gekrümmt ausgebildet ist, so dass er im geschlossenen Zustand den oberen Bereich 5b der Kunststoffmanschette sich an diese anlegend umgreift. An seinem anderen Ende verfügt der Hebel 4 über eine Ausnehmung, in welcher die Drehachse 7 angeordnet ist.

Damit der Hebel überhaupt verschwenkbar ist um diese Achse 7, verfügt der Klemmhebel auf dieser Seite über einen über einen Umfangsabschnitt verlaufenden Schlitz 10, in welchem der Querstift bei der Schwenkbewegung des Klemmhebels laufen kann. Dadurch bilden sich auf den beiden Seiten des Querstifts Abrollbereiche 8, welche als Exzenter ausgebildet sind.

Wie dies insbesondere aus den Figuren e), f), g) sowie m) und n) erkannt werden kann, führt die Exzentrizität dieses Abrollbereiches 8 dazu, dass der Abstand zwischen der Unterseite der Rändelschraube 12 und der auf der Aussenseite des ersten Vorsprungs angeordneten Gegenfläche 19 einen minimalen Wert annimmt in folge der Klemmung durch diesen Abrollbereich. Dort ist der Radius des Abrollbereichs bei geschlossener Position des Hebels (vgl. g) maximal oder nahezu maximal.

Bei geöffnetem Hebel hingegen (vgl. h) ist hingegen der Radius in Richtung zum Querstift in diesem Abrollbereich 8 wesentlich geringer, so dass sich die Kunststoffmanschette in Folge der Elastizität des Materials aufweiten kann, und sich der Spalt 15 erweitern kann, weil die Unterseite der Stellschraube nun einen grösseren Abstand zur dann zur Gegenfläche 19 gerichteten Region des Abrollbereichs 8 aufweist.

Die Rändelschraube 12 ist in diesem Fall im Wesentlichen einstückig mit dem Querstift 11 ausgebildet, und der Querstift 11 verfügt an seinem Ende über ein Gewinde, welches in ein Innengewinde in der Achse 7 eingreift. Durch eine Drehung der Rändelschraube 12 kann so der Abstand zwischen der Rändelschraube und der Drehachse 7 variabel eingestellt werden, so dass auch die Maximalkraft für die Klemmposition entsprechend eingestellt werden kann.

Die Klemmvorrichtung verfügt nun insbesondere über eine Metallmanschette 16, welche auf der Höhe des Klemmhebels im Bereich 5b die Manschette 16 auf der dem Spalt 15 entgegen gesetzten Seite umläuft. Die Metallmanschette verfügt auf der der Achse 7 zugewandten Seite über ein Loch, durch welches der Querstift hindurch greift. Die Metallmanschette 16 liegt in diesem Bereich in einer Vertiefung 18 drin und ist als Ebene ausgebildet, das heisst die Gegenfläche 19 ist als Ebene ausgebildet. Anschliessend folgt ein umlaufender Bereich, welcher bei geschlossenem Hebel hinter diesem versteckt ist und nur bei offenem Hebel (vgl.1)) freigelegt und sichtbar wird.

An ihrem anderen Ende verfügt die Metallmanschette 16 wiederum über ein Loch, durch welches der Querstift resp. die Stellschraube hindurch greift. Die Metallmanschette 16 liegt hier auf der Aussenseite des zweiten Vorsprungs 14 in einer Vertiefung 17, wobei auch die Vertiefung 17, genau wie die oben erwähnte Vertiefung 18, im Wesentlichen eine Tiefe aufweist, welcher der Dicke der Metallmanschette entspricht. Kurz vor der Rändelschraube 12 läuft die Metallmanschette durch einen Schlitz 20.

Durch die Anordnung dieser Metallmanschette 16 in umlaufender Weise mit den zwei genannten Öffnungen für den Durchtritt des Querstifts 11 werden gewissermassen die Gegenfläche 19 und die gegenüberliegende Rändelschraube 12 um den Umfang der Manschette herum miteinander verbunden, was dazu führt, dass wesentlich höhere Klemmkräfte eingestellt werden können, da die Klemmkraft, welche durch die um den Umfang herum anlegbare Kraft bestimmt ist, dann nicht mehr nur durch die Zugelastizität des verwendeten Kunststoffmaterials bestimmt wird, sondern durch jene der Metallmanschette. Die Metallmanschette 16 ist dabei in einer umlaufenden Vertiefung 22 angeordnet, und bei geschlossenem Hebel hinter diesem, sie ist damit kaum sichtbar kann aber ihre Funktion optimal wahrnehmen und kann leicht montiert werden.

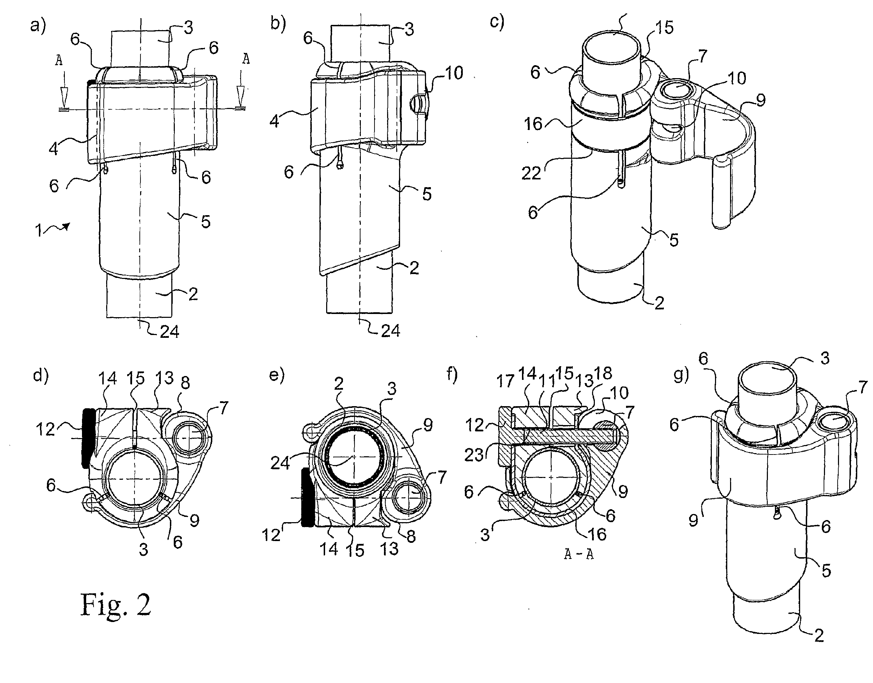

Ein zweites Ausführungsbeispiel einer Klemmvorrichtung ist in Figur 2 dargestellt. Die äquivalenten Bauteile und Elemente werden dabei, wie bei den weiteren Figuren, mit den gleichen Bezugszeichen angegeben wie bereits in Figur 1.

Der wesentliche Unterschied zwischen diesem zweiten Ausführungsbeispiel und dem in Figur 1 gezeigten besteht darin, dass hier der obere Abschnitt 5b der Manschette nicht nur den einzigen zwischen den beiden Vorsprüngen 13 und 14 angeordneten Schlitz 6, 15 aufweist, sondern noch zwei weitere wie insbesondere aus Figur 2c) ersichtlich ist. Diese beiden zusätzlichen Schlitze 6 sind gleichmässig zusammen mit dem Schlitz 15 um den Umfang verteilt (jeweils um 120 Grad versetzt), und sie ermöglichen einen wesentlich grösseren Spreizbereich im oberen Bereich 5b der Manschette.

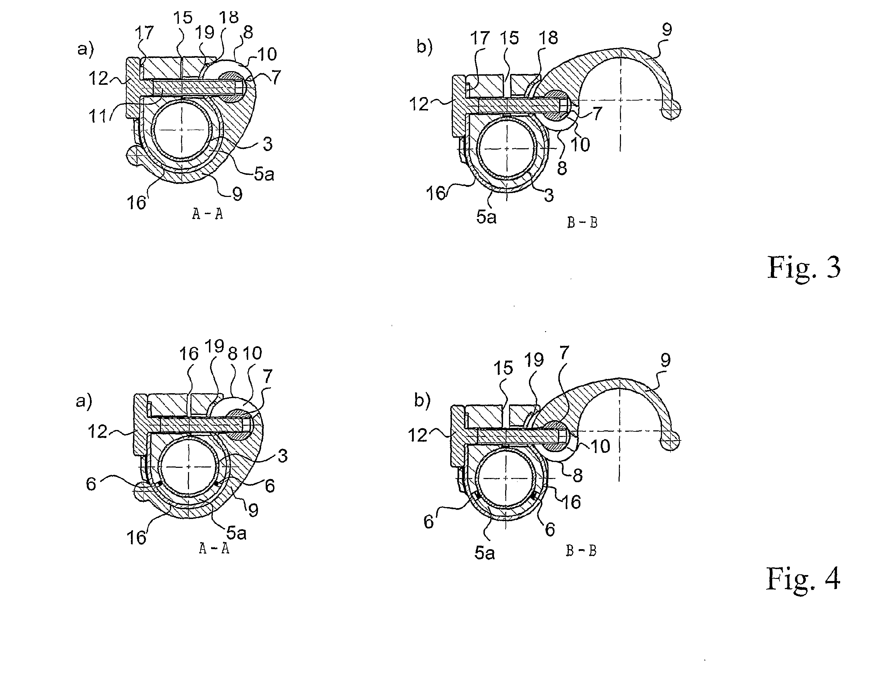

Ein weiteres Ausführungsbeispiel ist in Figur 3 in Schnittdarstellungen im geschlossenen (a) und im offenen (b) Zustand dargestellt. Im Wesentlichen unterscheidet sich dieses Ausführungsbeispiel von dem in Figur 1 dargestellten Ausführungsbeispiel nur darin, dass hier die Gegenfläche 19 nicht als Ebene ausgebildet ist sondern vielmehr gekrümmt, das heisst sie verfügt über eine konkave Oberfläche, welche dem Abrollbereich 8 des Hebels 4 zugewandt ist. Diese gekrümmte Gegenfläche 19 der Metallmanschette 16 liegt ihrerseits in einer gekrümmt ausgebildeten Vertiefung 18 im entsprechenden Vorsprung. So resultiert eine grössere Auflagefläche zwischen dem Abrollbereich 8 und dieser Gegenfläche 19, was für bestimmte Anwendungen vorteilhaft sein kann.

Das vierte Ausführungsbeispiel wie in Figur 4 dargestellt entspricht in den wesentlichen Punkten dem in Figur 2 dargestellten Ausführungsbeispiel, unterscheidet sich aber von diesem insofern, als auch hier die Gegenfläche 19 gekrümmt ausgebildet ist, wie bereits beim dritten Ausführungsbeispiel aus Figur 3.

Ein fünftes Ausführungsbeispiel ist in Figur 5 in der geschlossenen Position 5a)-5h) dargestellt, sowie in der offenen Position Fig. 5i)-5o). Auch hier werden, wie in Zusammenhang mit der Diskussion der anderen Figuren, gleiche Bezugszeichen für gleiche oder äquivalente Bauteile verwendet.

In diesem Fall ist der Hebelarm 9 des Klemmhebels in axialer Richtung wesentlich schlanker ausgebildet und liegt insbesondere um den Umfang des oberen Bereiches 5b in einer umlaufenden Vertiefung 25 im geschlossenen Zustand. Der Hebelarm 9 verfügt an seinem Ende über eine knopfartige Erweiterung, welche ihrerseits in einer Erweiterung dieser Vertiefung angeordnet ist, so dass dieser Knopf einfach mit den Fingern ergriffen werden kann. Alternativ sind auch andere Anformungen am Hebel möglich, diese können bei einem Metallhebel auch aus Kunststoff gefertigt sein.

In diesem Fall nun ist der Querstift 11, wie dies insbesondere aus den Figuren 5g), 5n) sowie 5o) ersichtlich ist, an seinem dem Hebel zugewandten Ende gabelförmig ausgebildet. Die zwei Gabelarme 30 definieren einen Schlitz, in welchem der Hebel, insbesondere der Abrollbereich 8 des Hebel, angeordnet ist. Der Hebel ist in diesem Schlitz durch die Drehachse 7 gelagert, welche zwischen den beiden Gabelarmen 30 und diese gewissermassen verbindend angeordnet ist. Ebenfalls in diesem Schlitz angeordnet ist ein Quersteg 28 des hier als spezielle "Unterlagsscheibe" ausgebildeten Metallelements 27. Das Metallelement 27, welches in einer Aufsicht speziell in Figur 5p) dargestellt ist, verfügt namentlich über zwei gegenüberliegende halbmondähnliche Durchtrittsöffnungen 29, durch welche jeweils Gabelarme (diese Gabelarme verfügen ebenfalls über entsprechende Querschnittsformen), hindurch treten. Dieses Metallelement 27 ist mit anderen Worten zwischen diesen beiden Gabelarmen und gleichzeitig diese umschliessend geführt und kann entlang einer Verschiebungsrichtung entlang der Achse des Querstifts 11 verschoben werden, einerseits begrenzt durch die Abrollfläche 8, andererseits begrenzt durch den Boden der Gabel. Damit sich das Metallelement 27 in der Vertiefung 18 nicht in einer Weise verdrehen kann, dass die beiden Gabelarme in den Durchtrittöffnungen 29 verklemmen, verfügt das Element 27 über einen Erweiterungsfortsatz 32 über den sonstigen radialen Umfang heraus. Dieser Erweiterungsfortsatz 32 liegt in einer entsprechenden radialen Erweiterung 33 der Vertiefung 18, und wenn ein Drehmoment auf das Metallelement 27 wirkt, so wird dieses durch den Eingriff von 32 in 33 aufgefangen und kann nicht zu einem Verklemmen der Gabelarme in den Durchtrittöffnungen 29 führen.

Das Metallelement 27 liegt in einer Vertiefung im ersten Vorsprung 13 und liegt mit seinem umlaufenden Bereich auf einer Schulter des ersten Vorsprungs auf. Diese Schulter dient als umlaufende Kraftaufnahmefläche für den Klemmvorgang.

Der Abrollbereich 8 läuft entsprechend bei dieser Konstruktion auf dem Quersteg 28. Die Kraft wird von diesem Quersteg 28 auf den ringförmigen Bereich des Metallelementes 27 übertragen und von diesem ringförmigen Bereich über die genannte Schulter der Vertiefung 17 auf den ersten Vorsprung 13. So können sehr lokal sehr hohe Kräfte in metallisch ausgebildeten Bereichen erzeugt werden, welche trotzdem grossflächig in den ersten Vorsprung 13, d.h. auf Kunststoffbereiche, eingetragen werden können, die lokale Druckbelastung auf dem Kunststoff kann so gering gehalten werden. Auch hier ist der Abrollbereich wiederum exzentrisch ausgebildet. Zudem ist auch hier ist eine Stellschraube 12, welche mit einem Innengewinde ausgebildet ist, in welches das als Aussengewinde ausgebildete gabelentfernte Ende des Querstifts eingeschraubt ist, vorgesehen. So ist wiederum die maximale Klemmung einstellbar.

Es ist selbstverständlich möglich, die einzelnen Ausführungsbeispiele miteinander zu kombinieren. So ist es insbesondere möglich, die Konstruktion gemäss Figur 5 mit einer Metallmanschette, wie beispielsweise in Figur 1, zu kombinieren, das heisst, es ist möglich, das Metallelement 27 in Form eines umlaufenden Metallbandes auszubilden. Ebenso ist es möglich, ein Ausführungsbeispiel, wie in Zusammenhang mit Figur 5 dargestellt, mit weiteren axialen Schlitzen 6 auszugestalten, um einen grösseren Verstellbereich zu erhalten.

In Figur 6 ist ein weiteres Ausführungsbeispiel nach der Erfindung dargestellt. Bei diesem Ausführungsbeispiel ist unter anderem im Bereich der Kunststoffmanschette 5, d.h. konkret im unteren Abschnitt 5a dieser Manschette eine Griffvertiefung 34 angeordnet mit einer geriffelten Oberfläche, welche die Handhabung des Stocks in diesem Bereich erleichtert.

Des weiteren ist bei diesem Ausführungsbeispiel der axiale Schlitz 6 in einer Ansicht parallel zur Stockachse wie beispielsweise in Figur 6e oder 6g sichtbar leicht v-förmig ausgestaltet selbst im geschlossenen Zustand.

Des weiteren erweitert sich der Schlitz 6 im Bereich des Übergangs des oberen Abschnitts 5b mit Schlitz zum unteren Abschnitt 5a ohne Schlitz in einen querverlaufenden Querschlitz 35. Dieser Querschlitz 35 führt dazu, dass die umfangsmässige Beweglichkeit im geschlitzten Bereich 5b einerseits grösser wird aber auch leichtgängiger. Mit anderen Worten ist eine geringere Kraft erforderlich, um die beiden Vorsprünge 13 und 14 durch ein umlegen des Hebels 4 zusammenzuführen und damit die umfangsmässige Klemmung um das Innenrohr 3 herzustellen.

Bei diesem Ausführungsbeispiel ist der Klemmhebel 4 schlank und zu seiner Spitze leicht zusammenlaufend ausgebildet, auf der Innenseite der leicht nach aussen aufgewölbten Spitze dieses Hebels sind zudem Griffnoppen 37 angeordnet. Der Hebelarm 9 des Hebels 4 liegt in der geschlossenen Position, wie dies in den Figuren 6a-h erkannt werden kann, in einer umlaufenden im Bereich 5b rückseitig zum Schlitz 6 angeordneten Vertiefung 25. So ergibt sich einerseits ein harmonischer Übergang der Gesamtkontur, durch die Aufwölbung an der Spitze zusammen mit den Griffnoppen kann aber mit dem Finger, gegebenenfalls auch mit einem Handschuh, ohne weiteres der Hebel für das Lösen der geschlossenen Position ergriffen und aufgeschwenkt werden.

Der Querstift 11, welcher weiter unten noch im Detail beschrieben werden soll, ist hier als Stift mit einem an seinem dem Hebel zugewandten Ende angeordneten Aussengewinde ausgestaltet. Auf dieses Aussengewinde wird eine Stellschraube 12 resp. eine speziell ausgestaltete Rändelmutter aufgeschraubt. Auch diese Rändelmutter 12 soll weiter unten im Detail beschrieben werden.

Der Hebel 4 verfügt, wie dies beispielsweise anhand der Figur 6i erkannt werden kann, auf seiner der Manschette zugewandten Unterseite über eine Vertiefung. In diese Vertiefung greift eine in der Vertiefung 25 umlaufend angeordnete Erhöhung 50 zur besseren Definition der geschlossenen Position ein.

Anhand der Figuren 6q-u soll nun insbesondere das Zusammenwirken von Querstift 11, Hebel 4 und Stellschraube 12 näher erläutert werden. Der Querstift 11 verfügt an seinem einen Ende über einen abgeflachten Abschnitt 39, welcher hier einen abgerundet rechteckig ausgebildeten Querschnitt aufweist. In diesem abgeflachten Bereich 39 ist eine quer verlaufende Durchtrittsöffnung 40 für den Achsstift 7, um welchen der Hebel 4 schwenkbar gelagert ist, angeordnet. Die Richtung dieser Durchtrittsöffnung 40 ist im Wesentlichen senkrecht zur Hauptverlaufsrichtung des Querstifts 11.

Einstückig an diesem abgeflachten Bereich 39 angeformt ist ein Gewindeabschnitt 38, welcher im wesentlichen einen Schraubenabschnitt darstellt.

Das Metallelement 27, welches im Detail in Figur 6v dargestellt ist, verfügt über die Hauptsache seines Umfangs über eine kreisrunde Aussenform, welche sich im Sinne eines Fortsatzes 32 auf einer Seite etwas erweitert. Dieser Fortsatz 32 greift, wie dies in Figur 6g dargestellt ist, in eine entsprechende Erweiterung 33, welche in der Vertiefung 18 im Vorsprung 13 vorgesehen ist, ein, und verhindert so, dass das Metallelement 27 in der Vertiefung 18 sich gewissermassen um die Achse des Querstifts 11 drehen kann, und dass sich damit auch der Querstift 11 und der Hebelarm 4 nicht um die Achse des Querstifts 11 drehen können.

Der abgeflachte Abschnitt 39 verfügt nun im wesentlichen um die gleiche, einfach etwas geringere, Querschnittsfläche als eine längliche Durchtrittsöffnung 42 im Metallelement 27 auf. Hier ist diese Durchtrittsöffnung 42 angerundet rechteckig ausgebildet, sie könnte aber auch einfach entsprechend der Querschnittsfläche des abgeflachten Abschnitts 39 eine andere Form aufweisen, sie könnte beispielsweise quadratisch sein, aber auch eine andere Form aufweisen angepasst an die Querschnittsfläche des Abschnitts 39. Es sollte einfach eine nicht-kreisförmige Form sein, damit sich der Stift 11 im Metallelement 27 nicht drehen kann, und dass sich damit auch Querstift 11 und Hebelarm 4 bezüglich Manschette nicht um die Achse des Querstifts 11 drehen können.

Der abgeflachte Bereich 39 verfügt nun in axialer Richtung des Querstifts 11 über eine Länge, dass er sowohl in der geschlossenen Position (vgl. Figur 6s) als auch in der offenen Position (vgl. Figur 6r) stets im Eingriff mit der dazu passend ausgebildeten Durchtrittsöffnung 42 ist. So wird sichergestellt, dass die relative Führung von Durchtrittsöffnung 42 und abgeflachtem Bereich 39 in jeder Hebelposition sichergestellt ist.

Eine spezielle Ausführungsform eines solchen Querstifts 11 ist in Figur 6u dargestellt. Insbesondere bei Stöcken, welche drei Rohrabschnitte aufweisen und entsprechend zwei derartige Klemmmechanismen erforderlich sind, ist es wichtig, dass die entsprechende Konstruktion der Klemme so leichtgewichtig ist wie möglich. Um eine Gewichtsreduktion zu ermöglichen, kann beim Querstift 11 in jenem Bereich, wo der abgeflachte Abschnitt 39 der Führung in der Durchtrittsöffnung 42 dient, eine weitere Bohrung, eine Zusatzbohrung 41, angeordnet sein. Diese kann, wie in Figur 6u dargestellt, gewissermassen parallel zur Durchtrittsöffnung 40 verlaufen, sie kann aber auch senkrecht dazu verlaufen oder es können auch zwei derartige Bohrungen vorgesehen sein, welche sich im Zentrum des Stiftes treffen.

Eine weitere Gewichtsersparnis wäre möglich, wenn im Gewindeabschnitt 38 ein Hohlraum angeordnet ist oder indem der Querstift beispielsweise als Zweikomponentenbauteil ausgebildet ist, bei welchem der Gewindebereich 38 aus Metall besteht und der abgeflachte Bereich 39 aus einem Kunststoff, oder bei welchem auch der Gewindebereich 38 nur an seiner Aussenseite aus einer metallenen Gewindemanschette ausgebildet ist in dessen Innenraum Kunststoff angeordnet ist.

In den Figuren 7 bis 9 sind spezielle Ausführungsformen von Rändelmuttern 12 dargestellt, jeweils oben links in einer seitlichen Ansicht, oben in der Mitte in einer Frontansicht, oben rechts in einem Schnitt gemäss der Linie x-x der zentralen Figur, in der Mitte sind verschiedene Ansichten von Einsatzelementen dargestellt und unten zwei perspektivische Ansichten.

In jedem der drei Fälle gemäss den Figuren 7 bis 9 verfügt die Rändelmutter über einen verjüngten Abschnitt 44 und über einen breiten Abschnitt 43, welcher insbesondre dafür ausgelegt ist, auf einer Schulter, welche durch die Vertiefung 26 beispielsweise gemäss Figur 6g gebildet wird, aufzuliegen, um so das Angreifen der Hebelkraft am Vorsprung 14 zu ermöglichen. Der verjüngte Abschnitt 44 greift in die Durchtrittsöffnung 23 ein, wie dies ebenfalls anhand von Figur 6g erkennbar ist.

Im Ausführungsbeispiel gemäss Figur 7 ist nun die gesamte Rändelmutter 12 aus Stahl gefertigt und verfügt insbesondere im verjüngten Abschnitt 44 über ein Innengewinde 46. Dieses Innengewinde tritt in Wechselwirkung mit dem Aussengewinde am Gewindeabschnitt 38 des Querstifts 11. Des weiteren verfügt der breite Verstellabschnitt 43 einerseits auf der Aussenseite über eine Zahnung, damit die Verstellung mit den Fingern einfach bewerkstelligt werden kann, auf der anderen Seite gibt es einen Schlitz 36, in welchen beispielsweise mit einem Werkzeug oder einer Münze eingegriffen werden kann.

Auf der Frontseite ist zudem angegeben, in welche Richtung gedreht werden muss, damit die Schraube festgestellt resp. gelöst werden kann.

Bei solchen Schrauben ist es dabei wichtig, dass sie sich nicht beim Gebrauch sukzessive lösen oder auch ungewünscht festziehen. Entsprechend ist beim Ausführungsbeispiel gemäss Figur 7, wie dies insbesondere anhand der Figur oben rechts erkannt werden kann, in der Durchtrittsöffnung der Mutter im Bereich des breiten Verstellabschnitts ein umlaufender Einstich vorhanden, in welchen ein O-Ring 45 aus Gummi eingelegt ist. Dieser O-Ring verfügt über eine Dicke, dass er etwas in die Durchtrittsöffnung hineinragt und entsprechend in Kontakt tritt mit dem Aussengewinde des Gewindeabschnitts 38 des Querstifts 11. Die Reibung zwischen dem O-Ring 45 und dem Aussengewinde des Abschnitts 38 wird dabei so eingestellt, dass die Mutter nur bei gezielter Manipulation relativ zum Querstift 11 verdreht werden kann.

Ein weiteres Ausführungsbeispiel ist in Figur 8 dargestellt, hier ist die Rändelmutter 12 aus Kunststoff, beispielsweise Polyamid oder Polypropylen, hergestellt und der Gewindebereich wird durch einen Gewindeeinsatz 47 aus Metall mit einem Innengewinde gebildet. Eine solche Rändelmutter wird beispielsweise hergestellt, indem der Gewindeeinsatz in einer Spritzgussform vorgegeben wird und anschliessend mit dem Kunststoff umspritzt wird.

Damit der Gewindeabschnitt 47 aus Metall im Kunststoff des restlichen Bauteils gut verankert ist, verfügt er einerseits über umlaufende Rippen und andererseits insbesondere auch über einen terminalen Flansch 48, welcher dann ungefähr in den breiten Verstellabschnitt 43 zu liegen kommt.

Um auch hier eine Hemmung der Drehung der Mutter relativ zum Stift zu gewährleisten, ist es möglich, in jenem Bereich 49, wo der Kunststoff die Aussenwand der Durchtrittsöffnung bildet, diesen Kunststoff leicht nach innen gewölbt, entweder umlaufend oder nur punktweise, auszubilden, dass durch die entsprechenden Vorsprünge eine ähnliche Wirkung erzeugt wird, wie durch den O-Ring 45 gemäss Figur 7.

Eine dritte Ausführungsform ist in Figur 9 dargestellt. Hier gibt es ebenfalls eine Metallmanschette 47, ebenfalls mit einem Flansch 48, in diesem Fall ist aber der Flansch 48 am dem Hebel zugewandten Ende des Abschnitts 44 angeordnet. Bei einer solchen Bauweise kann beispielsweise der Gewindeeinsatz 47 in ein bereits vorher gespritztes Bauteil eingepresst werden. Damit dann aber die Funktionalität sicher noch gewährleistet ist, ist es von Vorteil und unter Umständen sogar erforderlich, dass im Abschnitt 14, wie dies im Einsatz in Figur 9 unten rechts erkennbar ist, ein Stützabsatz 50 angeordnet ist, auf welchen sich dann der Flansch 48 und damit die ganze Rändelmutter 12 abstützen kann und das Metallelement 48 daran gehindert wird, gewissermassen aus dem Kunststoffbereich herausgerissen zu werden.

### BEZUGSZEICHENLISTE

| | | | |
|---|---|---|---|
| 1 | Klemmvorrichtung | 10 | Schlitz in 8 |
| 2 | Außenrohr | 11 | Querstift |
| 3 | Innenrohr | 12 | Stellschraube, Rändelmutter |
| 4 | Klemmhebel | 13 | erster Vorsprung |
| 5 | Kunststoffmanschette | 14 | zweiter Vorsprung |
| 5a | unterer Abschnitt von 5 | 15 | Spalt zwischen 13 und 14 |
| 5b | oberer Abschnitt von 5 | 16 | Metallmanschette |
| 6 | axialer Schlitz in 5b | 17 | Vertiefung in 14 für 16 |
| 7 | Drehachse von 4, Achsstift | 18 | Vertiefung in 13 für 16 |
| 8 | Abrollbereich von 4 | 19 | Gegenfläche für 8 an 16 |
| 9 | Hebelarm von 4 | 20 | Schlitz in 5 für 16 |
| 21 | gezahnte Oberfläche von 12 | 36 | Schlitz in 12 |
| 22 | umlaufende Vertiefung in 5b für 16 | 37 38 | Griffnoppen Gewindeabschnitt von 11 |
| 23 | Durchtrittsöffnung in 13 und 14 für 11 | 39 | abgeflachter Abschnitt von 11 |
| 24 | Stockachse | 40 | Durchtrittsöffnung für |
| 25 | Vertiefung in 5 für 9 | | Achsstift 7 |
| 26 | Vertiefung für 12 in 14 | 41 | Zusatzbohrung in 39 |
| 27 | Metallelement | | |
| 28 | Quersteg | 42 | Durchtrittsöffnung für 39 |
| 29 | Durchtrittsöffnungen in 27 für 30 | 43 | breiter Verstellabschnitt von 12 |
| 30 | Gabelarme von 11 | 44 | verjüngter Abschnitt von 12 |
| 31 | Schlitz zwischen 30 | 45 | O-Ring |
| 32 | Erweiterungsfortsatz an 27, Fortsatz | 46 47 | Innengewinde in 44 Gewindeeinsatz mit |
| 33 | radiale Erweiterung für 32 in 18 | 48 | Innengewinde Flansch an 47 |
| 34 | Griffvertiefung | 49 | Abschnitt von 12 |
| 35 | Querschlitz | 50 | Stützabsatz an 14 |

## Patentansprüche

1. Klemmvorrichtung (1) für einen Wanderstock, Trekkingstock, Nordic Walking-Stock, Langlaufstock oder Skistock zur lösbaren axialen Festlegung eines in eine Öffnung der Klemmvorrichtung einschiebbaren Rohrabschnittes (3), wobei die Klemmvorrichtung eine Kunststoffmanschette (5) umfasst, welche den Rohrabschnitt (3) wenigstens in einem axialen Abschnitt im wesentlichen unmittelbar umgreift und im geschlossenen Zustand klemmt, wobei die Kunststoffinanschette (5) wenigstens im den Rohrabschnitt (2) umgreifenden Bereich (5b) wenigstens einen axialen, den Umfang der Kunststoffmanschette in diesem Bereich variabel machenden Schlitz (6,15) aufweist und im verbleibenden axialen Bereich (5a) im wesentlichen umlaufend ausgebildet ist, wobei an der Kunststoffmanschette (5) beidseits dieses Schlitzes (6) jeweils ein Vorsprung (13,14) angeordnet ist, wobei diese Vorsprünge (13,14) eine koaxiale im wesentlichen senkrecht zur Achse (24) des Rohrabschnitts (3) angeordnete Durchtrittsöffnung (23) aufweisen, durch welche ein Querstift (11) hindurch greift, welcher an der Außenseite des zweiten Vorsprungs (14) über einen Anschlag (12) verfügt und welcher an der Außenseite des ersten Vorsprungs (13) eine senkrecht zur Achse des Querstifts (11) und parallel zur Achse (24) des Rohrabschnitts (3) angeordnete Drehachse (7) für einen Klemmhebel (4) aufweist, wobei der Klemmhebel (4) einen Hebelarm (9) aufweist, welcher bei geschlossener Klemmvorrichtung (1) die Kunststoffmanschette (5) wenigstens teilweise umgreift, und wobei der Klemmhebel (4) einen um die Drehachse (7) exzentrischen Abrollbereich (8) aufweist, mittels welchem sich der Abstand zwischen dem Anschlag (12) und einer auf der Außenseite des ersten Vorsprungs (13) angeordneten Gegenfläche (19) zur Klemmung durch verschwenken des Klemmhebels (4) in die geschlossene Position verringern lässt,
**dadurch gekennzeichnet, dass**
die Gegenfläche (19) in Form eines wenigstens teilweise im ersten Vorsprung (13) in einer Vertiefung (18) angeordneten Metallelements (16,27) ausgebildet ist.

2. Klemmvorrichtung (1) nach Anspruch 1, **dadurch gekennzeichnet, dass** die Gegenfläche (19) als ebene Fläche ausgebildet ist.

3. Klemmvorrichtung (1) nach Anspruch 1, **dadurch gekennzeichnet, dass** die Gegenfläche (19) als konkave Fläche ausgebildet ist, deren Krümmungsradius im wesentlichen dem Krümmungsradius des Abrollbereichs (8) angepasst ist.

4. Klemmvorrichtung (1) nach einem der vorhergehenden Ansprüche, **dadurch gekennzeichnet, dass** das Metallelement in Form eines die Kunststoffmanschette (5) auf deren Außenseite auf der den Vorsprüngen (13,14) gegenüberliegenden Seite umlaufenden, bevorzugtermassen einstückigen, Metallbandes (16) ausgebildet ist, dessen erstes Ende auf der dem Abrollbereich (8) zugewandten Außenseite des ersten Vorsprunges (13) in einer Vertiefung (18) angeordnet ist und eine erste Ausnehmung oder eine Durchgangsöffnung für den Querstift (11) aufweist, dessen Mittelbereich die Kunststoffmanschette (5), bevorzugtermassen in einer umlaufenden Vertiefung (22) um läuft, und dessen zweites Ende auf der dem Anschlag (12) zugewandten Außenseite des Zweiten Vorsprunges (14), bevorzugtermassen in einer Vertiefung (17), angeordnet ist und eine zweite Ausnehmung oder eine Durchgangsöffnung für den Querstift (11) und/oder ein Anschlagselement (12) aufweist.

5. Klemmvorrichtung (1) nach Anspruch 4, **dadurch gekennzeichnet, dass** das Metallband (16) eine Breite von 1-20 mm, vorzugsweise von 2-10 mm, insbesondere bevorzugt von 3-7 mm aufweist und bevorzugtermassen eine Dicke im Bereich von 0,1-2 mm, insbesondere bevorzugtermassen eine Dicke im Bereich von 0.25-1.5 mm aufweist, wobei das Metallband (16) insbesondere bevorzugtermassen aus gehärtetem Stahl, rostfreiem Stahl oder Federstahl besteht.

6. Klemmvorrichtung (1) nach einem der vorhergehenden Ansprüche, **dadurch gekennzeichnet, dass** das Metallelement (16, 27) beidseits der Gegenfläche (19) jeweils eine Durchgangsöffnung (29) aufweist und die Gegenfläche (19) durch den dazwischen liegenden Quersteg (28) gebildet wird, dass der Querstift (11) an seinem Klemmhebel-seitigen Ende gabelförmig ausgebildet ist, wobei die beiden Gabelarme (30) durch die Durchgangsöffnungen (29) hindurch greifen, wobei an den Enden der Gabelarme und diese verbindend die Drehachse (7) angeordnet ist und wobei der Abrollbereich (8) des Klemmhebels (4) zwischen den Gabelarmen (30) derart angeordnet ist, dass er bei Schwenkbewegung des Klemmhebels (4) auf dem Quersteg (28) läuft.

7. Klemmvorrichtung (1) nach Anspruch 6, **dadurch gekennzeichnet, dass** das Metallelement (27) kreisscheibenförmig ausgebildet ist und in einer Vertiefung (18) im ersten Vorsprung (13) entlang der Achse des Querstifts (11) verschieblich angeordnet ist, und dass die Tiefe der Vertiefung (18) größer ist als die Dicke des Metallelements (27), wobei vorzugsweise die Dicke des Metallelements (27) im Bereich von 0.5-3mm, vorzugsweise im Bereich von 1-2mm liegt, und die Tiefe der Vertiefung (18) im Bereich von 3-10 mm, vorzugsweise im Bereich von 5-8 mm.

8. Klemmvorrichtung (1) nach einem der vorhergehenden Ansprüche, **dadurch gekennzeichnet, dass** der Querstift (11) an seinem Klemmhebel-seitigen Ende T-förmig ausgebildet ist, wobei die seitlichen Arme die Drehachse (7) für den Klemmhebel bilden, der Klemmhebel (4) für den Querstift (11) einen Schlitz (10) aufweist, welcher den Abrollbereich (8) in zwei seitlich des Querstifts (11) angeordnete Abrollbereiche aufteilt.

9. Klemmvorrichtung (1) nach einem der vorhergehenden Ansprüche, **dadurch gekennzeichnet, dass** die Kunststoffmanschette (5) in ihrem oberen Abschnitt (5b) wenigstens zwei, vorzugsweise wenigstens drei axial verlaufende Schlitze (6,15) aufweist, wobei wenigstens einer dieser Schlitze (15) zwischen den beiden Vorsprüngen (13,14) angeordnet ist und vorzugsweise diese Schlitze gleichmäßig um den Umfang verteilt sind.

10. Klemmvorrichtung (1) nach einem der vorhergehenden Ansprüche, **dadurch gekennzeichnet, dass** der Anschlag (12) verstellbar ausgebildet ist, wobei vorzugsweise der Anschlag (12) mit einem Gewinde ausgebildet ist und der Querstift (11) mit einem Gegengewinde, und der Anschlag als Mutter oder Schraube ausgebildet ist, vorzugsweise mit einer umlaufenden Zahlung (21) und/oder einem Kamm und/oder einer Nut für den Eingriff eines Verstellwerkzeugs.

11. Klemmvorrichtung (1) nach einem der vorhergehenden Ansprüche, **dadurch gekennzeichnet, dass** sie im verbleibenden axialen Bereich (5a) zur Aufnahme und Befestigung des Abschnitts eines Außenrohres (2) ausgebildet ist, wobei das Außenrohr (2) einen Innendurchmesser aufweist, welcher im wesentlichen gleich ist oder nur unwesentlich größer als der Außendurchmesser des Rohrabschnitts (3).

12. Klemmvorrichtung (1) nach einem der vorhergehenden Ansprüche, **dadurch gekennzeichnet, dass** es sich bei der Durchtrittsöffnung (23) in beiden Vorsprüngen um ein rundum geschlossenes Loch handelt mit bevorzugtermassen einen Durchmesser im Bereich von 2-7 mm, wobei bevorzugtermassen der Durchmesser des Querstift (11) im durch diese Durchtrittsöffnungen (23) hindurchtretenden Bereich im Bereich von 2-6 mm liegt.

13. Klemmvorrichtung (1) nach einem der vorhergehenden Ansprüche, **dadurch gekennzeichnet, dass** der Hebelarm (9) bei geschlossener Klemmvorrichtung wenigstens abschnittsweise in einer Vertiefung (25) in der Kunststoffmanschette (5) angeordnet ist und/oder dass der Hebel aus Metall gefertigt ist, wobei ganz oder teilweise aus Oberflächen-gehärtetem Metall, gehärtet insbesondere im Abrollbereich, gefertigt ist, und wobei vorzugsweise angeformte Kunststoffbereiche vorgesehen sind, vorzugsweise aus grifffreundlichem Material.

14. Stock, insbesondere Wanderstock, Trekkingstock, Nordic Walking-Stock, Langlaufstock oder Skistock mit einer Klemmvorrichtung nach einem der vorhergehenden Ansprüche, insbesondere bevorzugt zur Längenverstellung von wenigstens zwei Rohrabschnitten (2, 3) oder drei Rohrabschnitten.

15. Stock nach Anspruch 14, **dadurch gekennzeichnet, dass** zusätzlich zur Klemmvorrichtung eine auf der Innenseite der Rohrabschnitte (2, 3) angeordnete Klemmvorrichtung mit wenigstens einem Spreizelement vorgesehen ist.

## Claims

1. A clamping device (1) for a hiking pole, trekking pole, Nordic walking pole, cross-country ski pole, or ski pole, for axially securing in a releasable manner a tube portion (3) that can be pushed into an opening of the clamping device, wherein the clamping device comprises a plastics-material sleeve (5) which engages essentially directly around the tube portion (3), at least along an axial portion, and clamps the same in the closed state, wherein the plastics-material sleeve (5), at least in the region (5b) engaging around the tube portion (2), has at least one axial slot (6, 15), which renders the circumference of the plastics-material sleeve variable in this region, and is of essentially encircling design in the remaining axial region (5a), wherein a respective protrusion (13, 14) is arranged on the plastics-material sleeve (5) on either side of this slot (6), wherein these protrusions (13, 14) have a coaxial through-passage opening (23), which is arranged essentially perpendicularly to the axis (24) of the tube portion (3) and through which engages a transverse pin (11) which, on the outside of the second protrusion (14), has a stop (12) and, on the outside of the first protrusion (13), has a rotary axis (7) for a clamping lever (4), this axis being arranged perpendicularly to the axis of the transverse pin (11) and parallel to the axis (24) of the tube portion (3), wherein the clamping lever (4) has a lever arm (9) which, with the clamping device (1) closed, engages at least partially around the plastics-material sleeve (5), and wherein the clamping lever (4) has an eccentric rolling region (8) around the rotary axis (7), it being possible for the distance between the stop (12) and a counter-surface (19), which is arranged on the outside of the first protrusion (13), to be reduced by means of this rolling region for clamping purposes, by virtue of the clamping lever (4) being pivoted into the closed position,
**characterized in that** the counter-surface (19) is designed in the form of a metal element (16, 27) which is arranged, at least in part, in the first protrusion (13), in a depression (18).

2. The clamping device (1) as claimed in claim 1, **characterized in that** the counter-surface (19) is designed as a planar surface.

3. The clamping device (1) as claimed in claim 1, **characterized in that** the counter-surface (19) is designed as a concave surface of which the radius of curvature is adapted essentially to the radius of curvature of the rolling region (8).

4. The clamping device (1) as claimed in one of the preceding claims, **characterized in that** the metal element is designed in the form of a preferably single-piece metal band (16) which encircles the outside of the plastics-material sleeve (5), on the side located opposite the protrusions (13, 14), and of which the first end is arranged on the outside of the first protrusion (13), the outside being directed toward the rolling region (8), in a depression (18) and has a first aperture or a through-opening for the transverse pin (11), the central region of which band runs around the plastics-material sleeve (5), preferably in an encircling depression (22), and the second end of which band is arranged on the outside of the second protrusion (14), this outside being directed toward the stop (12), preferably in a depression (17), and has a second aperture or a through-opening for the transverse pin (11) and/or a stop element (12).

5. The clamping device (1) as claimed in claim 4, **characterized in that** the metal band (16) has a width of 1-20 mm, preferably of 2-10 mm, in particular preferably of 3-7 mm, and preferably a thickness in the range of 0.1-2 mm, in particular preferably a thickness in the range of 0.25-1.5 mm, wherein the metal band (16) consists in particular preferably of hardened steel, stainless steel or spring steel.

6. The clamping device (1) as claimed in one of the preceding claims, **characterized in that** the metal element (16, 27) has a respective through-opening (29) on either side of the counter-surface (19) and the counter surface (19) is formed by the crosspiece (28) located therebetween, and **in that** the transverse pin (11) is designed in a fork-like manner at its clamping lever end, wherein the two fork arms (30) engage through the through-openings (29), wherein the rotary axis (7) is arranged at the ends of the fork arms, and connect the same, and wherein the rolling region (8) of the clamping lever (4) is arranged between the fork arms (30) such that it runs on the crosspiece (28) when the clamping lever (4) pivots.

7. The clamping device (1) as claimed in claim 6, **characterized in that** the metal element (27) is designed in the form of a circular disk and is arranged in a depression (18) in the first protrusion (13) such that it can be displaced along the axis of the transverse pin (11), and **in that** the depth of the depression (18) is greater than the thickness of the metal element (27), wherein preferably the thickness of the metal element (27) is in the range of 0.5-3 mm, preferably in the range of 1-2 mm, and the depth of the depression (18) is in the range of 3-10 mm, preferably in the range of 5-8 mm.

8. The clamping device (1) as claimed in one of the preceding claims, **characterized in that** the transverse pin (11) is of T-shaped design at its clamping-lever end, wherein the lateral arms form the rotary axis (7) for the clamping lever, and the clamping lever (4), for the transverse pin (11), has a slot (10) which divides up the rolling region (8) into two rolling regions arranged to the sides of the transverse pin (11).

9. The clamping device (1) as claimed in one of the preceding claims, **characterized in that** the plastics-material sleeve (5), in its upper portion (5b), has at least two, preferably at least three, axially running slots (6, 15), wherein at least one of these slots (15) is arranged between the two protrusions (13, 14) and these slots are preferably distributed uniformly around the circumference.

10. The clamping device (1) as claimed in one of the preceding claims, **characterized in that** the stop (12) is of adjustable design, wherein preferably the stop (12) is designed with a thread and the transverse pin (11) is designed with a mating thread, and the stop is designed as a nut or screw, preferably with an encircling toothing formation (21) and/or a ridge and/or a groove for the engagement of an adjustment tool.

11. The clamping device (1) as claimed in one of the preceding claims, **characterized in that** it is formed, in the remaining axial region (5a), for the purpose of receiving and fastening the portion of an outer tube (2), wherein the outer tube (2) has an internal diameter which is essentially equal to, or only insignificantly greater than, the external diameter of the tube portion (3).

12. The clamping device (1) as claimed in one of the preceding claims, **characterized in that** the through-passage opening (23) in the two protrusions is a hole which is closed all the way round and preferably has a diameter in the range of 2-7 mm, wherein preferably the diameter of the transverse pin (11), in the region which passes through these through-passage openings (23), is in the range of 2-6 mm.

13. The clamping device (1) as claimed in one of the preceding claims, **characterized in that** the lever arm (9), with the clamping device closed, is arranged, at least in part, in a depression (25) in the plastics-material sleeve (5), and/or **in that** the lever is produced from metal, wholly or partially from surface-hardened metal, hardened in particular in the rolling region, and wherein formed-on plastics-material regions, preferably made of easy-to-grip material, are preferably provided.

14. A pole, in particular hiking pole, trekking pole, Nordic walking pole, cross-country ski pole, or ski pole, having a clamping device as claimed in one of the preceding claims, in particular preferably for the length adjustment of at least two tube portions (2, 3) or three tube portions.

15. The pole as claimed in claim 14, **characterized in that**, in addition to the clamping device, a clamping device with at least one spreading element is provided on the inside of the tube portions (2, 3).

## Revendications

1. Dispositif de serrage (1) pour un bâton de randonnée, un bâton de trekking, un bâton de marche nordique, un bâton de ski de fond ou un bâton de ski, en vue de la fixation axiale libérable d'une portion tubulaire (3) pouvant être insérée dans une ouverture du dispositif de serrage, le dispositif de serrage comportant un manchon en plastique (5) qui entoure essentiellement directement la portion tubulaire (3) au moins dans une portion axiale et la serre à l'état fermé, le manchon en plastique (5) comprenant, au moins dans la région (5b) entourant la portion tubulaire (2), au moins une fente (6, 15) axiale rendant la circonférence du manchon en plastique variable dans cette région et étant réalisé de manière essentiellement périphérique dans la région axiale restante (5a), une saillie (13, 14) respective étant disposée sur le manchon en plastique (5) des deux côtés de cette fente (6), ces saillies (13, 14) comprenant une ouverture de passage (23) coaxiale disposée essentiellement perpendiculairement à l'axe (24) de la portion tubulaire (3), à travers laquelle ouverture de passage vient en prise une goupille transversale (11) qui dispose, sur le côté extérieur de la deuxième saillie (14), d'une butée (12) et qui présente, sur le côté extérieur de la première saillie (13), un axe de rotation (7) pour un levier de serrage (4) disposé perpendiculairement à l'axe de la goupille transversale (11) et parallèlement à l'axe (24) de la portion tubulaire (3), le levier de serrage (4) comprenant un bras de levier (9) qui, lorsque le dispositif de serrage (1) est fermé, entoure au moins partiellement le manchon en plastique (5), et le levier de serrage (4) comprenant une région de roulement (8) excentrique autour de l'axe de rotation (7), au moyen de laquelle la distance entre la butée (12) et une surface conjuguée (19) disposée sur le côté extérieur de la première saillie (13) peut être diminuée par pivotement du levier de serrage (4) dans la position fermée en vue du serrage,
**caractérisé en ce que**
la surface conjuguée (19) est réalisée sous la forme d'un élément métallique (16, 27) disposé au moins partiellement dans la première saillie (13) dans un renfoncement (18).

2. Dispositif de serrage (1) selon la revendication 1, **caractérisé en ce que** la surface conjuguée (19) est réalisée sous forme de surface plane.

3. Dispositif de serrage (1) selon la revendication 1, **caractérisé en ce que** la surface conjuguée (19) est réalisée sous forme de surface concave dont le rayon de courbure est adapté essentiellement au rayon de courbure de la région de roulement (8).

4. Dispositif de serrage (1) selon l'une quelconque des revendications précédentes, **caractérisé en ce que** l'élément métallique est réalisé sous la forme d'une bande métallique (16), de préférence d'une seule pièce, entourant le manchon en plastique (5) sur son côté extérieur sur le côté opposé aux saillies (13, 14), dont la première extrémité est disposée dans un renfoncement (18) sur le côté extérieur de la première saillie (13) tourné vers la région de roulement (8) et comprend un premier évidement ou une ouverture traversante pour la goupille transversale (11), dont la région médiane entoure le manchon en plastique (5), de préférence dans un renfoncement périphérique (22), et dont la deuxième extrémité est disposée de préférence dans un renfoncement (17) sur le côté extérieur de la deuxième saillie (14) tourné vers la butée (12) et comprend un deuxième évidement ou une ouverture traversante pour la goupille transversale (11) et/ou un élément de butée (12).

5. Dispositif de serrage (1) selon la revendication 4, **caractérisé en ce que** la bande métallique (16) présente une largeur de 1 à 20 millimètres, de préférence de 2 à 10 millimètres, de manière particulièrement préférée de 3 à 7 millimètres et présente de préférence une épaisseur dans la plage de 0,1 à 2 millimètres, de manière particulièrement préférée une épaisseur dans la plage de 0,25 à 1,5 millimètres, la bande métallique (16) étant constituée de manière particulièrement préférée d'acier trempé, d'acier inoxydable ou d'acier à ressorts.

6. Dispositif de serrage (1) selon l'une quelconque des revendications précédentes, **caractérisé en ce que** l'élément métallique (16, 27) présente respectivement une ouverture traversante (29) des deux côtés de la surface conjuguée (19) et la surface conjuguée (19) est formée par la nervure transversale (28) située entre celles-ci, **en ce que** la goupille transversale (11) est réalisée en forme de fourche à son extrémité située du côté du levier de serrage, les deux bras de fourche (30) venant en prise à travers les ouvertures traversantes (29), l'axe de rotation (7) étant disposé aux extrémités des bras de fourche et de manière à relier ceux-ci, et la région de roulement (8) du levier de serrage (4) étant disposée entre les bras de fourche (30), de telle sorte qu'elle roule sur la nervure transversale (28) lors du mouvement de pivotement du levier de serrage (4).

7. Dispositif de serrage (1) selon la revendication 6, **caractérisé en ce que** l'élément métallique (27) est réalisé en forme de disque circulaire et est disposé dans un renfoncement (18) dans la première saillie (13) de manière déplaçable le long de l'axe de la goupille transversale (11), et **en ce que** la profondeur du renfoncement (18) est supérieure à l'épaisseur de l'élément métallique (27), et de préférence l'épaisseur de l'élément métallique (27) se situant dans la plage de 0,5 à 3 millimètres, de préférence dans la plage de 1 à 2 millimètres, et la profondeur du renfoncement (18) se situant dans la plage de 3 à 10 millimètres, de préférence dans la plage de 5 à 8 millimètres.

8. Dispositif de serrage (1) selon l'une quelconque des revendications précédentes, **caractérisé en ce que** la goupille transversale (11) est réalisée en forme de T à son extrémité située du côté du levier de serrage, les bras latéraux formant l'axe de rotation (7) pour le levier de serrage, le levier de serrage (4) comprenant une fente (10) pour la goupille transversale (11), laquelle fente divise la région de roulement (8) en deux régions de roulement disposées latéralement par rapport à la goupille transversale (11).

9. Dispositif de serrage (1) selon l'une quelconque des revendications précédentes, **caractérisé en ce que** le manchon en plastique (5) comprend dans sa portion supérieure (5b) au moins deux, de préférence au moins trois, fentes s'étendant axialement (6, 15), au moins l'une de ces fentes (15) étant disposée entre les deux saillies (13, 14) et ces fentes étant de préférence réparties uniformément sur la circonférence.

10. Dispositif de serrage (1) selon l'une quelconque des revendications précédentes, **caractérisé en ce que** la butée (12) est réalisée de manière réglable, la butée (12) étant de préférence réalisée avec un filetage et la goupille transversale (11) étant réalisée avec un filetage conjugué, et la butée étant réalisée sous forme d'écrou ou de vis, de préférence avec une denture périphérique (21) et/ou une strie et/ou une rainure pour l'entrée en prise d'un outil de réglage.

11. Dispositif de serrage (1) selon l'une quelconque des revendications précédentes, **caractérisé en ce qu'**il est réalisé pour recevoir et fixer la portion d'un tube extérieur (2) dans la région axiale restante (5a), le tube extérieur (2) présentant un diamètre intérieur qui est essentiellement égal au diamètre extérieur de la portion tubulaire (3) ou n'est que légèrement plus grand que celui-ci.

12. Dispositif de serrage (1) selon l'une quelconque des revendications précédentes, **caractérisé en ce que** l'ouverture de passage (23) dans les deux saillies est un trou fermé sur tout son pourtour présentant de préférence un diamètre dans la plage de 2 à 7 millimètres, le diamètre de la goupille transversale (11) dans la région traversant ces ouvertures de passage (23) se situant de préférence dans la plage de 2 à 6 millimètres.

13. Dispositif de serrage (1) selon l'une quelconque des revendications précédentes, **caractérisé en ce que**, lorsque le dispositif de serrage est fermé, le bras de levier (9) est disposé au moins partiellement dans un renfoncement (25) dans le manchon en plastique (5) et/ou **en ce que** le levier est fabriqué en métal, entièrement ou partiellement en métal à surface trempée, en particulier trempé dans la région de roulement, et des régions en plastique façonnées étant de préférence prévues, de préférence en matériau facile à saisir.

14. Bâton, en particulier bâton de randonnée, bâton de trekking, bâton de marche nordique, bâton de ski de fond ou bâton de ski, comprenant un dispositif de serrage selon l'une quelconque des revendications précédentes, de manière particulièrement préférée pour le réglage en longueur d'au moins deux portions tubulaires (2, 3) ou trois portions tubulaires.

15. Bâton selon la revendication 14, **caractérisé en ce qu'**il est prévu, en plus du dispositif de serrage, un dispositif de serrage comprenant au moins un élément d'écartement et disposé sur le côté intérieur des portions tubulaires (2, 3).
